# EUROPEAN PATENT SPECIFICATION

(11) **EP 3 540 460 B1**
(45) Date of publication and mention of the grant of the patent: **04.05.2022**
(21) Application number: 19159468.8
(22) Date of filing: 26.02.2019
(51) Int. Cl.: G01S 17/931, G01S 17/42, G01S 7/487

(54) **LIGHT RECEIVING APPARATUS, OBJECT DETECTION APPARATUS, DISTANCE MEASUREMENT APPARATUS, MOBILE OBJECT APPARATUS, NOISE MEASURING METHOD, OBJECT DETECTING METHOD, AND DISTANCE MEASURING METHOD**
LICHTEMPFANGSVORRICHTUNG, OBJEKTERKENNUNGSVORRICHTUNG, ENTFERNUNGSMESSVORRICHTUNG, MOBILE OBJEKTVORRICHTUNG, RAUSCHMESSVERFAHREN, OBJEKTERKENNUNGSVERFAHREN UND ENTFERNUNGSMESSVERFAHREN
APPAREIL DE RÉCEPTION DE LUMIÈRE, APPAREIL DE DÉTECTION D'OBJET, APPAREIL DE MESURE DE DISTANCE, APPAREIL D'OBJET MOBILE, PROCÉDÉ DE MESURE DE BRUIT, PROCÉDÉ DE DÉTECTION D'OBJET ET PROCÉDÉ DE MESURE DE DISTANCE

(30) Priority: 15.03.2018 JP 2018047402
(43) Date of publication of application: 18.09.2019
(73) Proprietor: Ricoh Company, Ltd., Tokyo 143-8555 (JP)
(72) Inventor: YOSHINO, Yuuta, Tokyo, 143-8555 (JP)
(74) Representative: J A Kemp LLP

(56) References cited:
- EP-A1- 3 147 690
- EP-A1- 3 217 189
- US-A- 5 831 717
- US-A1- 2017 273 161
- US-A1- 2017 356 796

## Description

### BACKGROUND

### Technical Field

The present disclosure relates to a light receiving apparatus, an object detection apparatus, a distance measurement apparatus, a mobile object apparatus, a noise measuring method, an object detecting method, and a distance measuring method.

### Description of the Related Art

There is an apparatus provided with a light receiving unit that includes a light receiving element receiving light and photoelectrically converting the light into electrical signals, and a signal detection unit that detects the electrical signals output from the light receiving unit with reference to a threshold (for example, see Japanese Unexamined Patent Application Publication JP H10253760 A).

However, the apparatus disclosed in Japanese Unexamined Patent Application Publication JP H10253760 A can be further improved in terms of measuring a level of a noise included in the electrical signals output from the light receiving unit while substantially avoiding upsizing of the apparatus. Further light receiving apparatus with an adjustable threshold are known from EP 3 217 189 A1, US 2017/273161 A1 and US 2017/356796 A1.

### SUMMARY

The invention is defined by the appended claims. The present disclosure measures a level of a noise included in electrical signals output from a light receiving unit while substantially avoiding upsizing of an apparatus.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 schematically illustrates a configuration of an object detection apparatus according to an embodiment;
FIG. 2A illustrates a light projecting optical system and a synchronization system, FIG. 2B illustrates a light receiving optical system, and FIG. 2C schematically illustrates an optical path from a laser diode (LD) 11 to a reflecting mirror, and an optical path from the reflecting mirror to a light receiving element;
FIG. 3 is a timing chart illustrating a synchronization signal and an LD drive signal;
FIG. 4A is a timing chart illustrating a light emitting pulse and a light receiving pulse, and FIG. 4B is a timing chart illustrating the light emitting pulse and the light receiving pulse after binarization;
FIG. 5A is a block diagram illustrating a function example of a noise measurement system, and FIG. 5B is a block diagram illustrating a hardware configuration example of the noise measurement system;
FIGS. 6A and 6B illustrate a principle of measurement of a noise level;
FIGS. 7A to 7C illustrate normal distributions representing counted number of signals exceeding a voltage value Vn in three cases with different light-intensities of incident light;
FIG. 8 is a graph illustrating a relationship between an output of a light source for calibration and a standard deviation σ of the normal distribution;
FIGS. 9A and 9B illustrate a method for setting an appropriate threshold voltage in accordance with a level of a shot noise;
FIG. 10 illustrates an object detection apparatus according to a first embodiment;
FIG. 11 illustrates an object detection apparatus according to a second embodiment;
FIG. 12 illustrates an operation example 1 of a light projection system and a light receiving system;
FIG. 13 illustrates an example of a normal distribution representing the counted number of signals exceeding each threshold Vn for noise measurement;
FIG. 14 illustrates an object detection apparatus according to a third embodiment;
FIG. 15 is a flowchart illustrating a distance measurement process;
FIG. 16 is a flowchart illustrating a noise measurement process;
FIG. 17 illustrates an object detection apparatus according to a fourth embodiment;
FIG. 18 illustrates an object detection apparatus according to a fifth embodiment;
FIG. 19 illustrates a method for measuring a distance by dividing an effective scanning area two-dimensionally in horizontal and vertical directions by using an object detection apparatus;
FIG. 20 illustrates an operation example 2 of a light projection system and a light receiving system;
FIG. 21 is a histogram illustrating a frequency of occurrence of time for each section when time (elapsed time) from the start of light emission by the light emitting element to detection of a light receiving signal is divided into a plurality of sections; and
FIG. 22 illustrates a sensing apparatus.

The accompanying drawings are intended to depict embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

An object detection apparatus 100 according to an embodiment of the present disclosure is described with reference to the drawings.

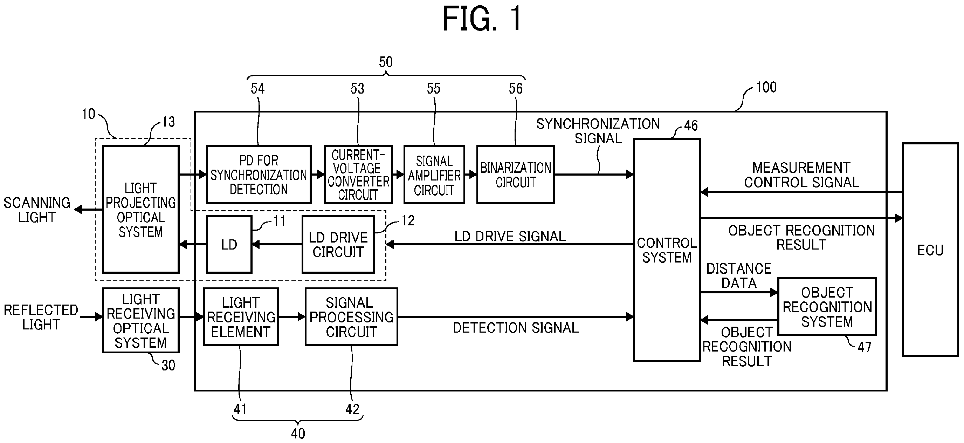

FIG. 1 schematically illustrates the object detection apparatus 100 in a block diagram.

The object detection apparatus 100 is a scanning laser radar (also referred to as "laser lidar") that is mounted in, for example, a vehicle (e.g., a car) as a moving object, projects light, and receives light reflected or scattered by an object (a preceding vehicle, a stopped vehicle, an obstacle, a pedestrian, etc.),so as to detect information on the object (hereinafter also referred to as "object information"), such as presence or absence of the object and a distance to the object. The object detection apparatus 100 receives power supply from, for example, a vehicle battery (storage battery).

That is, the object detection apparatus 100 functions as an object presence/absence determination apparatus (apparatus for determining presence/absence of an object), a distance measurement apparatus (distance measurement device), or an object recognition apparatus (apparatus for recognizing position, shape, size, etc., of an object).

As illustrated in FIG. 1 as an example, the object detection apparatus 100 includes a light projection system 10, a light receiving optical system 30, a light receiving system 40, a control system 46, a synchronization system 50, an object recognition system 47, etc.

When the object detection apparatus 100 is used as an object presence/absence determination apparatus, functions and configurations relating to distance calculation and object recognition described below are unnecessary.

When the object detection apparatus 100 is used as a distance measurement apparatus, functions and configurations relating to object recognition described below are unnecessary.

The light projection system 10 includes an LD 11 as a light emitting element (light source), an LD drive circuit 12, and a light projecting optical system 13. "LD" is an abbreviation of a laser diode.

The LD 11 is also called an edge emitting laser, and is driven by the LD drive circuit 12 to emit laser light. The LD drive circuit 12 turns the LD 11 on (makes the LD 11 emit light) by using the LD drive signal (rectangular pulse signal) output from the control system 46 as a trigger. The LD drive circuit 12 includes, for example, a capacitor connected so that a current can be supplied to the LD 11, a transistor that switches conduction/non-conduction between the capacitor and the LD 11, a charger capable of charging the capacitor, etc. The control system 46 receives measurement control signals (measurement start signals, and measurement stop signals) from an electronic control unit (ECU) of a car and starts and stops measurement.

Although the LD 11 is used as the light emitting element, the light emitting element is not limited to the LD 11. For example, a vertical cavity surface emitting laser (VCSEL), an organic electroluminescent (EL) element, a light emitting diode (LED), and lasers other than LD and VCSEL may be used.

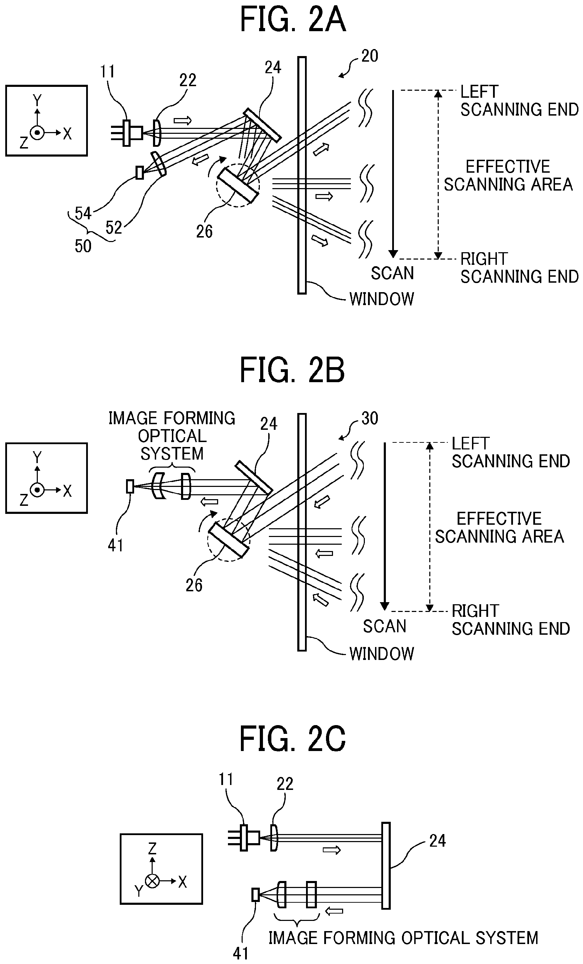

FIG. 2A schematically illustrates the light projecting optical system 13 and the synchronization system 50. FIG. 2B schematically illustrates the light receiving optical system 30. Hereinafter, an XYZ three-dimensional orthogonal coordinate system of which vertical direction is a Z axis direction illustrated in FIG. 2A and other drawings is used in description.

As illustrated in FIG. 2A, the light projecting optical system 13 includes a coupling lens 22 disposed on an optical path of light from the LD 11, a reflecting mirror 24 disposed on the optical path of the light via the coupling lens 22, and a rotating mirror 26 as a deflector disposed on the optical path of the light reflected by the reflecting mirror 24. Here, in order to downsize the apparatus, the reflecting mirror 24 is provided on the optical path between the coupling lens 22 and the rotating mirror 26 as a deflector so as to fold the optical path.

The light emitted from the LD 11 is shaped into a specified beam profile by the coupling lens 22, reflected by the reflecting mirror 24, and then deflected by the rotating mirror 26 around the Z axis.

The light deflected by the rotating mirror 26 to a specified deflection range around the Z axis is the light projected from the light projecting optical system 13, that is, the light emitted from the object detection apparatus 100.

The rotating mirror 26 includes a plurality of reflecting surfaces around its rotation axis (Z axis).The rotating mirror 26 reflects (deflects) the light from the reflecting mirror 24 while rotating around the rotation axis so as to one-dimensionally scan an effective scanning area that corresponds to the deflection range with the light in a horizontal, one-axis direction (here, a Y axis direction). Here, the deflection range and the effective scanning area are on a +X side of the object detection apparatus 100. Hereinafter, a rotating direction of the rotating mirror 26 is also referred to as "mirror rotating direction."

As can be seen from FIG. 2A, the rotating mirror 26 includes two reflecting surfaces (two surfaces facing each other), but the present disclosure is not limited to this configuration. The rotating mirror 26 may include a single reflecting surface or three or more reflecting surfaces. Alternatively, the rotating mirror 26 may include at least two reflecting surfaces disposed at different angles with respect to the rotation axis of the rotating mirror 26 so that an area to be scanned/detected may be switched in the Z-axis direction.

As the deflector, other mirrors such as a polygon mirror (rotating polygon mirror), a galvanometer mirror, and a micro-electro-mechanical-system (MEMS) mirror may be used instead of the rotating mirror.

As illustrated in FIG. 2B, the light receiving optical system 30 includes the rotating mirror 26 that reflects light projected from the light projecting optical system 13 and is reflected or scattered by an object located in the effective scanning area, the reflecting mirror 24 that reflects the light from the rotating mirror 26, and an image forming optical system disposed on the optical path of the light from the reflecting mirror 24 and forming an image of the light on a light receiving element 41 of a later-described light receiving system 40.

The light projecting optical system 13 and the light receiving optical system 30 are installed in the same casing. The casing has an opening on the optical path of the light emitted from the light projecting optical system 13 and on the optical path of the incident light to the light receiving optical system 30, and the opening is covered with a window (light transmitting window member). The window may be made of, for example, glass or resin.

FIG. 2C illustrates the optical path from the LD 11 to the reflecting mirror 24 and the optical path from the reflecting mirror 24 to the light receiving element 41.

As can be seen from FIG. 2C, the light projecting optical system 13 and the light receiving optical system 30 are disposed to overlap in the Z axis direction. The rotating mirror 26 and the reflecting mirror 24 are used in common by the light projecting optical system 13 and by the light receiving optical system 30. With this configuration, relative displacement between a light irradiation range on the object by the LD 11 and a light receivable range of the light receiving element 41 is reduced and the object can be detected reliably.

The light projected from the light projecting optical system 13 and reflected or scattered by the object is guided to the image forming optical system via the rotating mirror 26 and the reflecting mirror 24, and is focused on the light receiving element 41 by the image forming optical system (see FIG. 2B). In FIG. 2B, in order to downsize the apparatus, the reflecting mirror 24 is provided between the rotating mirror 26 and the image forming optical system to fold the optical path. Although the image forming optical system is formed by two lenses (image forming lenses), but the image forming optical system may be formed by a single lens, or three or more lenses. Alternatively, a mirror optical system is used.

As illustrated in FIG. 1, the light receiving system 40 includes the light receiving element 41 and a signal processing circuit 42. The light receiving element 41, disposed on the optical path of light through the light receiving optical system 30, receives the light, photoelectrically converts the light into electrical signals, and outputs the electrical signals. The signal processing circuit 42 includes a waveform processing circuit that processes the electrical signals output from the light receiving element 41 to detect light receiving timing in the light receiving element 41, and outputs a detection signal to the control system 46. The electrical signals output from the light receiving element 41 are a current (output current). Details of the waveform processing circuit and the signal processing circuit 42 are described later.

As illustrated in FIG. 2A and FIG. 1, the synchronization system 50 includes a synchronization lens 52, a current-voltage converter circuit 53, a light receiving element 54, an amplifier circuit 55, and a binarization circuit 56. The synchronization lens 52 is disposed on the optical path of the light emitted from the LD 11 and reflected by the reflecting mirror 24 via the coupling lens 22 and deflected by the rotating mirror 26 and again reflected by the reflecting mirror 24. The light receiving element 54 is disposed on the optical path of the light via the synchronization lens 52, and receives the light, photoelectrically converts the light into electrical signals, and outputs the electrical signals. The current-voltage converter circuit 53 converts the electrical signals (output current) output from the light receiving element 54 into voltage signals. The amplifier circuit 55 amplifies the voltage signals from the current-voltage converter circuit 53. The binarization circuit 56 includes a comparator that binarizes the voltage signals from the amplifier circuit 55 with reference to a threshold and, while the voltage signals exceed the threshold, outputs a high-level signal as a synchronization signal to the control system 46.

More specifically, the reflecting mirror 24 is disposed upstream of the rotating mirror 26 in the rotating direction with respect to the deflection range, and the light deflected to the upstream of the deflection range by the rotating mirror 26 enters the reflecting mirror 24. The light deflected by the rotating mirror 26 and reflected by the reflecting mirror 24 enters the light receiving element 54 via the synchronization lens 52.

Alternatively, the reflecting mirror 24 may be disposed downstream of the rotating mirror 26 in the rotating direction with respect to the deflection range. The synchronization system 50 may be disposed on the optical path of the light deflected by the rotating mirror 26 and reflected by the reflecting mirror 24.

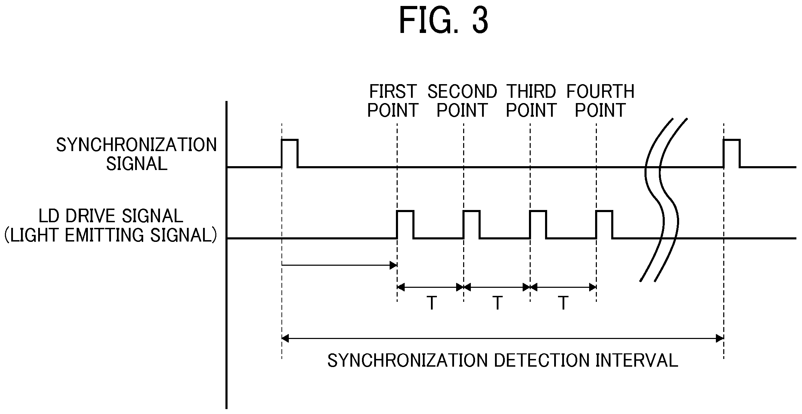

An electrical signal (output current) is output from the light receiving element 54 each time the light reflected by the reflecting surface of the rotating mirror 26 is received by the light receiving element 54. As a result, the synchronization signal is periodically output from the binarization circuit 56 (see FIG. 3).

With a synchronous turning-on of the light with which the light receiving element 54 is irradiated via the rotating mirror 26 in this manner, rotation timing of the rotating mirror 26 can be obtained from the light receiving timing at the light receiving element 54.

Therefore, by pulse turning on the LD 11 after a lapse of specified time from synchronous turning-on of the LD 11, the effective scanning area can be optically scanned. That is, by pulse turning on the LD 11 in a period before and after the timing at which the light receiving element 54 is irradiated with light, the effective scanning area can be optically scanned.

By generating synchronization signals at the same cycle as the rotating cycle of the rotating mirror 26 and generating the LD drive signals for each synchronization signal, the effective scanning area can be optically scanned repeatedly.

The synchronization system does not necessarily have to include a synchronization lens, or may include other type of optical element (e.g., a condenser mirror).

As the light receiving element 41 and the light receiving element 54, a photodiode (PD), an avalanche photodiode (APD), a single photon avalanche diode (SPAD) which is a Geiger mode APD, or the like, may be used. Since APD and SPAD are sensitive to PD, APD and SPAD are more useful in terms of detection accuracy and detection distance.

The control system 46 generates LD drive signals based on the synchronization signals from the binarization circuit 56 and outputs the LD drive signals to the LD drive circuit 12.

That is, the LD drive signals are light emitting signals delayed with respect to the synchronization signals (pulse signals for causing the LD to emit light) (see FIG. 3).

When the LD drive signals are input in the LD drive circuit 12, a drive current is applied from the LD drive circuit 12 to the LD 11, and pulsed light is output from the LD 11. Since a duty ratio of light emission of the LD 11 is limited from the viewpoint of safety and durability of the LD 11, a pulse width of the pulsed light output from the LD 11 may be narrower, and is generally set to be 10 ns to several tens of ns. The pulse interval is generally on the order of tens of microseconds.

Based on the LD drive signals and signals output from the signal processing circuit 42, the control system 46 measures a distance to an object (object to be measured), and outputs a measurement result as distance data to the object recognition system 47.

The control system 46 includes a control unit, an operating unit, a storage unit, etc.

In the control system 46, the storage unit is formed by memory, a hard disk, etc., and other constituent elements are formed by a central processing unit (CPU), an integrated circuit (IC), a field program marker gate array (FPGA), etc.

The object recognition system 47 recognizes position, shape, size, etc. of the object based on a plurality of types of distance data acquired from the control system 46 in one scanning event or a plurality of scanning events, and outputs an object recognition result to the control system 46. The control system 46 transfers the object recognition result to the ECU.

The object recognition system 47 is formed by a CPU, an IC, an FPGA, etc.

Based on the transferred object recognition result, the ECU performs steering control (e.g., automatic steering), speed control (e.g., automatic braking, and automatic accelerator) of a car, and issues a visual or audible warning to a driver, and the like.

At least one of the control system 46 and the object recognition system 47 may not be provided, and the ECU may perform the function of the excluded system (46 or 47).

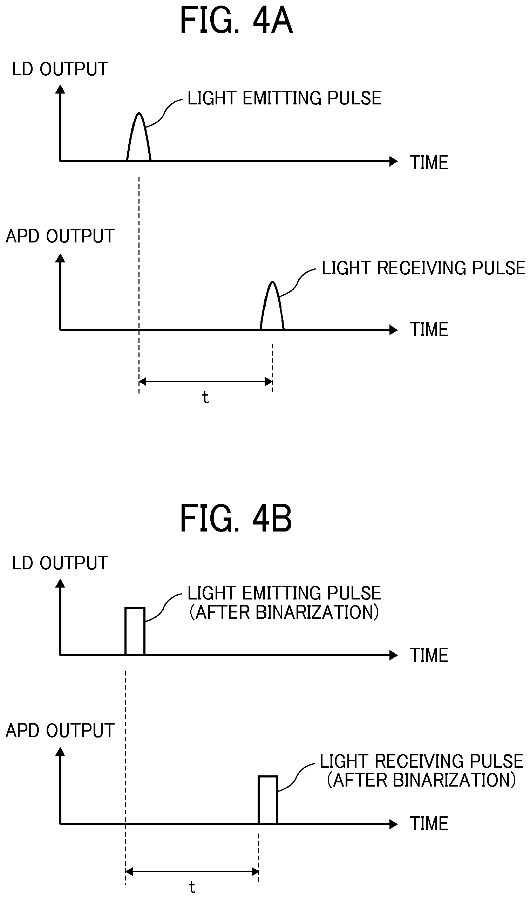

During the scanning of the effective scanning area by using the rotating mirror 26, the LD drive circuit 12 drives the LD 11 (i.e., causes the LD 11 to emit light) to emit pulsed light as illustrated in FIG. 4A (hereinafter also referred to as "light emitting pulse"). The pulsed light emitted from the LD 11 and reflected (scattered) by the object (hereinafter also referred to as "light receiving pulse") is received by the light receiving element 41 (APD is used as the light receiving element in FIG. 4A).

The distance to the object can be calculated by measuring time t from when the LD 11 emits the light emitting pulse to when the light receiving pulse is received by the APD. Time t may be measured in several ways. For example, as illustrated in FIG. 4B, a light emitting pulse is received by the light receiving element such as a PD, photoelectrically converted, subject to current-voltage conversion (and then signal amplification as necessary), and an obtained voltage signal is binarized with reference to a threshold voltage to form a rectangular pulse; the light receiving pulse is received by the APD, photoelectrically converted, subject to current-voltage conversion (and then signal amplification as necessary), and an obtained voltage signal (light receiving signal) is binarized to form a rectangular pulse; and time t between leading edges of both the rectangular pulses may be measured by the control system 46. Alternatively, time t may be measured by converting the waveforms of the light emitting pulse and the light receiving pulse into digital data through analog-digital (A-D) conversion, and performing a correlation operation of the digital data of these waveforms.

When a laser radar (object detection apparatus) is to be used in an environment with a low signal-to-noise (SN) ratio, averaging is typically performed to distinguish noise from signals from the object in order not to erroneously detect the noise as signals converted from the light reflected or scattered from a target (object to be measured) (hereinafter also referred to as "signal from the target" or "signal from the object").

More specifically, each time light is emitted by the light source, a distance value (measurement result of the distance) at which a signal having a value equal to or larger than a specified voltage value (i.e., threshold) is detected in a subsequent signal processing circuit of the light receiving element is stored in, for example, the memory. When a histogram or a frequency distribution table representing the frequency (appearance frequency) of the distance value for each distance class (a distance range from the laser radar is divided into a plurality of distance classes) is created based on the distance value that is stored in the memory, the frequency at the distance at which the target exists is significantly high, so the distance can be measured without erroneous detection even in an environment with a low SN ratio.

However, if such averaging is performed, data capacity increases in proportion to the number of signals storing the distance value each time light is emitted and the number of times of light emission. Therefore, it is necessary to increase storage capacity of the memory incorporated in the laser radar (i.e., it is necessary to upsize the memory).

Therefore, there is a concern that the circuit in which the memory is incorporated is upsized and, in turn, the laser radar is upsized. If the number of signals to store is decreased in order to downsize the memory, there is another concern that all of the storage capacity of the memory is filled with the distance values at which noise is detected, and the averaging is not able to be performed appropriately. The same is true for the number of times of light emission.

To address these issues, a dedicated noise detection apparatus may be incorporated in the laser radar to increase a threshold voltage, lower a gain of the signal, or the like when a noise level is high. In this case, probability of detection of noise decreases, and it hardly happens that all of the storage capacity of the memory is filled with noise.

In this case, however, there is a concern that the laser radar is upsized by the size of the noise detection apparatus. Further, since voltage values of signals converted from light reflected or scattered from a target located at a distant place (hereinafter also referred to as "distant object") or a target with low reflectance (hereinafter also referred to as "low-reflectance object") is lowered, there is a concern that the signals is not able to be detected and detection performance is impaired.

Therefore, in order to avoid erroneous detection due to noise and to enable detection of distant objects and low-reflection objects while substantially avoding upsizing of the laser radar, it is requested to measure a noise level (level of noise) without using a dedicated noise detection apparatus and to set an appropriate threshold voltage in accordance with the measurement result.

Therefore, after an intensive study, the inventors developed a noise measurement system capable of accurately measuring the noise level by using a light receiving element standardly provided in the laser radar.

Hereinafter, a function example and a hardware configuration example of a noise measurement system incorporated in the object detection apparatus 100 as a laser radar are described. The noise measurement system described below is an example of the "light receiving apparatus" of the present disclosure.

### <Function Example of Noise Measurement System>

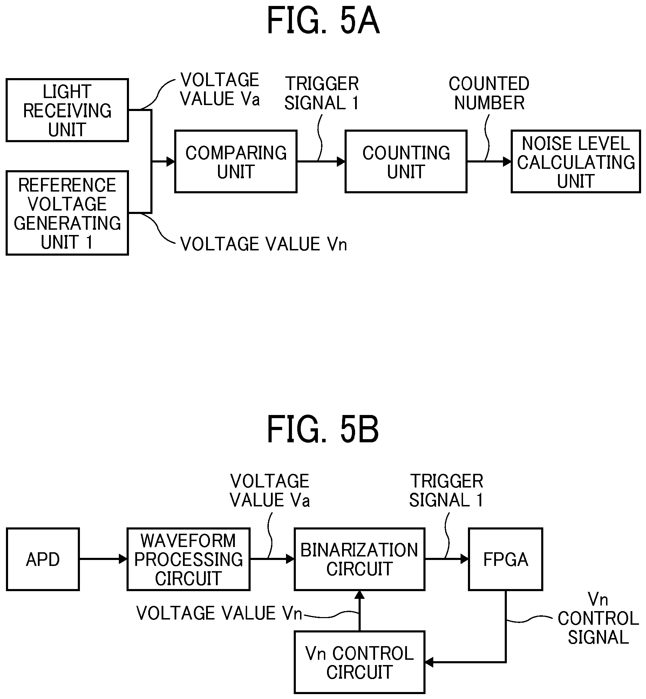

FIG. 5A is a block diagram illustrating a function example of the noise measurement system.

As illustrated in FIG. 5A, the noise measurement system includes, for example, a light receiving unit, a reference voltage generating unit 1, a comparing unit, a counting unit, and a noise level calculating unit.

The light receiving unit includes, for example, a light receiving element and a waveform processing circuit. As the light receiving element, a PD, an APD, etc. are used.

The waveform processing circuit includes a current-voltage converter circuit that converts a current output from the light receiving element into a voltage, and outputs a voltage value Va.

The waveform processing circuit may include, as a subsequent circuit of the current-voltage converter circuit, an amplifying circuit that amplifies minute signals or a filter circuit through which only a specific frequency band passes.

The reference voltage generating unit 1 generates a reference voltage and outputs a voltage value Vn of the reference voltage. The reference voltage generating unit 1 includes, for example, a variable voltage source, and can vary the voltage value Vn to generate.

The comparing unit is formed by, for example, a binarization circuit including a comparator and an operational amplifier. The comparing unit compares the voltage value Va output from the light receiving unit with the voltage value Vn output from the reference voltage generating unit 1, and outputs a signal indicating a comparison result.

More specifically, the comparing unit compares the voltage value Va output from the light receiving unit with the voltage value Vn output from the reference voltage generating unit 1 (hereinafter also referred to as "threshold Vn for noise measurement") and, when the comparison result is Va > Vn, generates a trigger signal 1 and outputs a generated trigger signal 1 to the counting unit.

The counting unit includes, for example, a counter, and counts the number of times the trigger signal 1 is input from the comparing unit for each voltage value Vn.

The noise level calculating unit is implemented by an FPGA, a CPU, etc., and calculates a noise level based on counted number (count result) by the counting unit for each voltage value Vn.

The noise measurement system shares the light receiving unit with an object information detection system (system for detecting object information) of the object detection apparatus 100.

### <Hardware Configuration Example of Noise Measurement System>

FIG. 5B is a block diagram illustrating a hardware configuration example of the noise measurement system.

As illustrated in FIG. 5B, the noise measurement system includes, for example, an APD as a light receiving element, a waveform processing circuit, a binarization circuit, a Vn control circuit, and an FPGA.

The binarization circuit, functioning as a comparing unit, binarizes a signal output from the waveform processing circuit with reference to the voltage value Va (threshold voltage), and outputs a binary signal (rectangular pulse signal) as the trigger signal 1.

The Vn control circuit, functioning as a part of the reference voltage generating unit 1, controls the voltage value Vn which is the threshold voltage of the binarization circuit.

The FPGA, functioning as the other part of the reference voltage generating unit 1, the counting unit, and the noise level calculating unit, calculates the noise level and controls the Vn control circuit based on the trigger signal 1 output from the binarization circuit for each voltage value Vn.

In the noise measurement system configured as described above, when the APD receives light and performs photoelectric conversion, the voltage value Va of the signal (voltage signal) output from the waveform processing circuit is input to the binarization circuit, and a rectangular pulse signal as a Vn control signal is transmitted from the FPGA to the Vn control circuit and, while the level of the rectangular pulse signal is high, the voltage value Vn is input from the Vn control circuit to the binarization circuit in an arbitrary control range.

When Va becomes higher than Vn (Va > Vn), the binarization circuit outputs the trigger signal 1 to the FPGA.

The FPGA counts the number of times the trigger signals 1 are input for each voltage value Vn and calculates the noise level based on the counted number. Instead of the FPGA, a CPU or a microcomputer may be used.

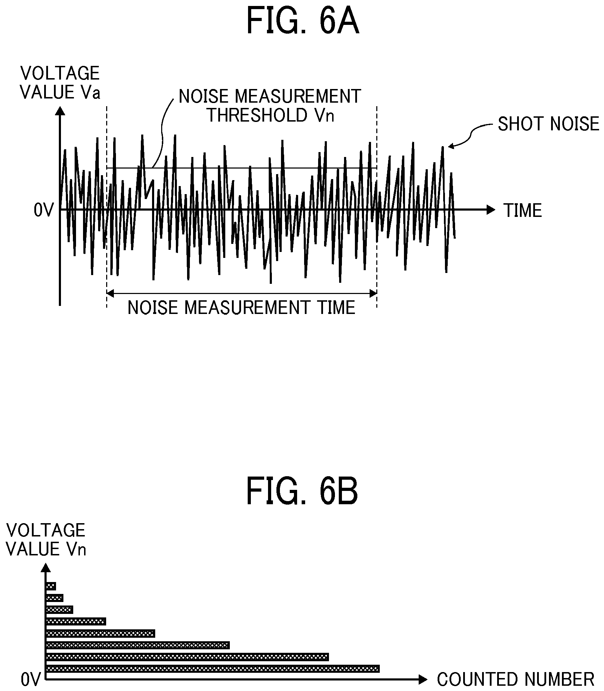

FIG. 6A illustrates a temporal change of the voltage value Va output from the waveform processing circuit when light enters the light receiving element that is used in common by the object information detection system and the noise measurement system. When light enters the light receiving element, a shot noise that causes fluctuation which is temporally random is generated in Va.

At this time, the FPGA sets noise measurement time to be sufficiently longer than response time of the circuit, and counts the number of times events in which Va is larger than Vn (Va > Vn) occur (i.e., the number of times the trigger signals 1 are input). Hereinafter, the number of times the trigger signals 1 are input is also referred to as "counted number."

As illustrated in FIG. 6A, when Va fluctuates in positive and negative directions from 0 V, the counted number tends to be larger as Vn becomes closer to 0 V, and the counted number tends to be smaller as Vn becomes farther away from 0 V. It is noted that, when the noise measurement time is set to be sufficiently long with the control range of Vn being set to 0 or greater, the relationship between Vn and the counted number is based on the normal distribution as illustrated in FIG. 6B.

Here, an instantaneous noise level increases as light-intensity of light incident on the light receiving element (hereinafter also referred to as "incident light") increases and, even if Vn is large, the number of times events in which Va is larger than Vn (Va > Vn) occur increases.

That is, as the light-intensity of incident light becomes larger, the width of the normal distribution tends to be wider (the counted number tends to increase).

In general, the standard deviation of the normal distribution represented by Vn and the counted number is proportional to the square root of light-intensity of incident light.

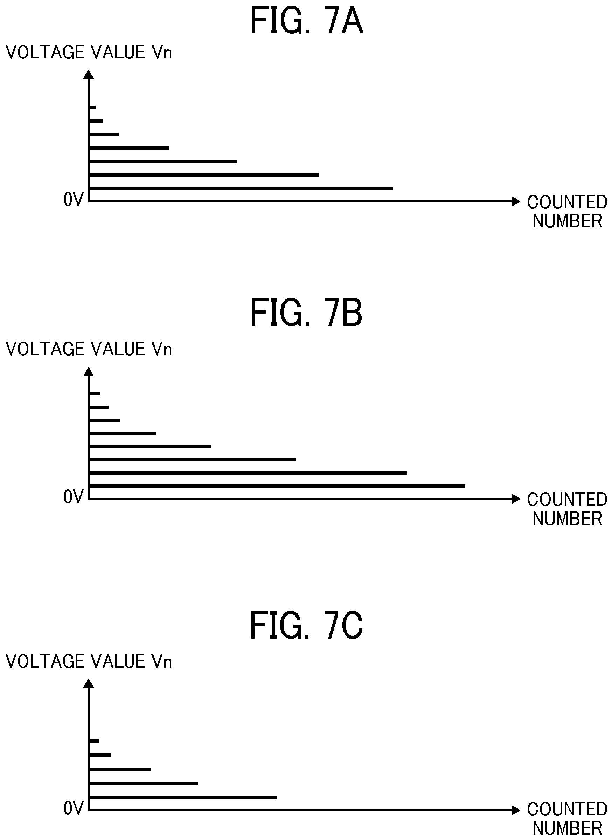

FIGS. 7A to 7C illustrate the above-described normal distributions in three cases with different light-intensities of incident light.

In the case of FIG. 7B, the light-intensity of incident light is higher than that of the case of FIG. 7A, and the standard deviation of the normal distribution is larger than that of the case of FIG. 7A.

In the case of FIG. 7C, the light-intensity of incident light is lower than that of the case of FIG. 7A, and the standard deviation of the normal distribution is smaller than that of the case of FIG. 7A.

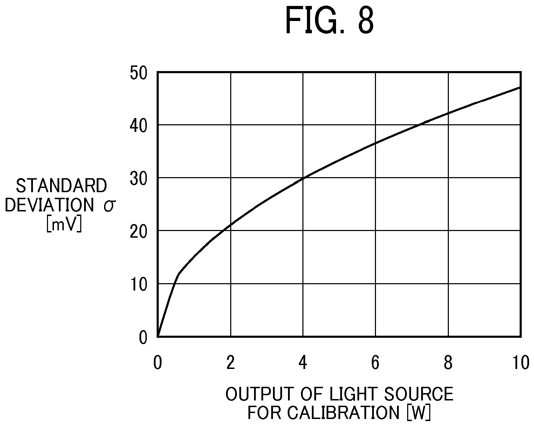

Here, as a calibration method of the noise measurement system, the following procedure may be used. The light emitted from a light source for calibration is made to enter the light receiving element, and a standard deviation σ of the normal distribution is calculated. Then, the light-intensity of the light emitted from the light source for calibration is varied, and the standard deviation σ of the normal distribution is obtained similarly. As this process is repeated, a curve in which the standard deviation σ varies in proportion to the square root of the output of the light source for calibration is obtained. An example of this curve is illustrated in FIG. 8.

It is therefore possible to estimate the light-intensity of light incident on the light receiving element from the standard deviation σ of the normal distribution obtained by the noise measurement system. As the light source for calibration, LED, LD, an incandescent lamp, etc. may be used.

As described above, by measuring the level of the shot noise in the noise measurement system when the light enters the light receiving element, it is possible to set an appropriate threshold voltage for that shot noise when the light enters the light receiving element.

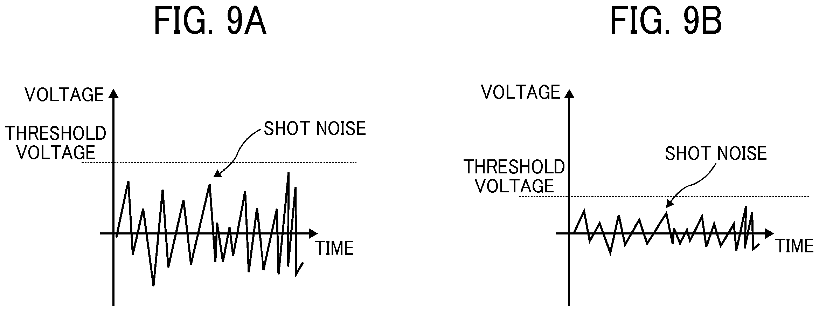

For example, in a case in which the shot noise is large as illustrated in FIG. 9A or a case in which the shot noise is small as illustrated in FIG. 9B, by setting the threshold voltage to slightly exceed the level of the shot noise, it is possible to avoid erroneous detection due to the noise and to detect distant objects and low-reflectance objects.

As can be understood from the description above, in the present embodiment, a method for estimating the noise level is introduced from a combination of a light receiving element and a binarization circuit, which are typically used in a laser radar.

More specifically, like a typical laser radar, a signal output from the light receiving element is input to the binarization circuit. A shot noise is produced when external light (sunlight, illumination light, etc.) different from the reflected and scattered light from the target enters the light receiving element. The shot noise is converted into an electrical signal and input to the binarization circuit in the same manner as the signal converted from the reflected or scattered light.

The shot noise is a fluctuation generated with a random probability in time, and an amplitude of the electrical signal output from the light receiving element is dependent on the amount of incident external light. Here, as the threshold voltage of the binarization circuit is moved from the low side to the high side, when the threshold voltage is low, the frequency of the amplitude of the electrical signal exceeds the threshold voltage tends to be higher and, as the threshold voltage increases, the frequency of the amplitude of the electrical signal exceeds the threshold voltage tends to be lower.

In addition, for a laser radar, there is the highest threshold voltage for detecting a minute signal by light reflected or scattered by a distant object or a low-reflectance object.

Therefore, an optimum threshold voltage that makes it difficult to detect noise and capable of detecting distant objects and low-reflectance objects can be determined.

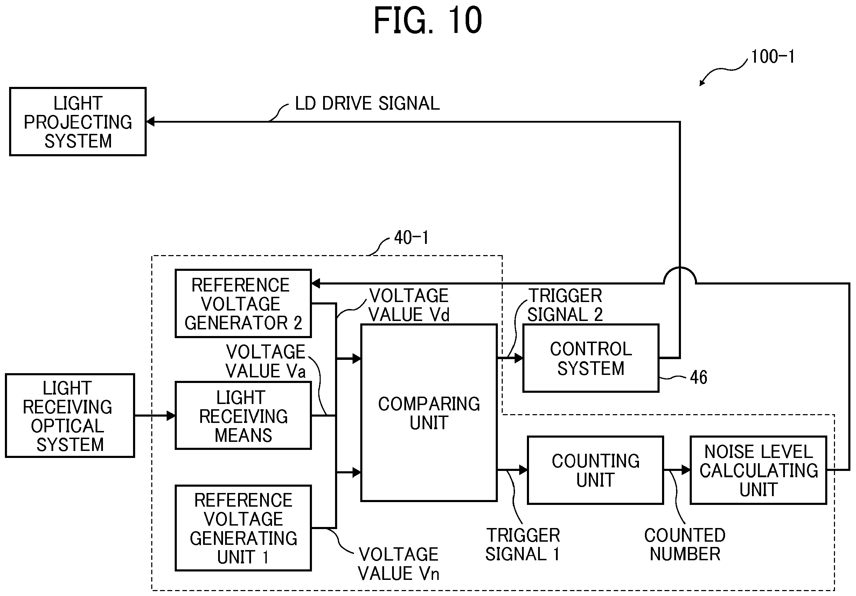

Next, as an example of the object detection apparatus 100, an object detection apparatus 100-1 according to a first embodiment provided with a noise measurement system is described with reference to FIG. 10. FIG. 10 mainly illustrates a function of the light receiving system, and the synchronization system 50 and the object recognition system 47 are not illustrated.

### <Object Detection Apparatus According to First Embodiment>

The object detection apparatus 100-1 according to the first embodiment includes a light receiving system 40-1 which is an example of the light receiving system 40. Here, the light receiving system 40-1 functions as the "light receiving apparatus" of the present disclosure.

The light receiving system 40-1 includes a noise measurement system including the light receiving unit illustrated in FIG. 5A, and a reference voltage generating unit 2.

As described above, the noise measurement system measures the level of noise (noise level) from the number of times events in which Va is larger than Vn (Va > Vn) for each Vn occur (i.e., the counted number of the counting unit).

The reference voltage generating unit 2 includes, for example, a variable voltage source. The reference voltage generating unit 2 generates a reference voltage value Vd (hereinafter also referred to as "object detection threshold Vd" or "distance measurement threshold Vd") on the basis of the noise level measured by the noise measurement system, and outputs the generated Vd to the comparing unit. The voltage value Va from the current-voltage converter is also input to the comparing unit.

The comparing unit compares Va with Vd, generates a trigger signal 2 when Va is larger than Vd (Va > Vd), and outputs the comparison result as a detection signal to the control system 46.

The control system 46 calculates a time difference ΔT between the leading edge of the light emitting pulse from the LD of the light projection system and timing at which the trigger signal 2 is input. If the light incident on the light receiving element is the light that is the light emitting pulse reflected or scattered by the target and returned, ΔT × c/2 (c is a light speed) is calculated as the distance to the target.

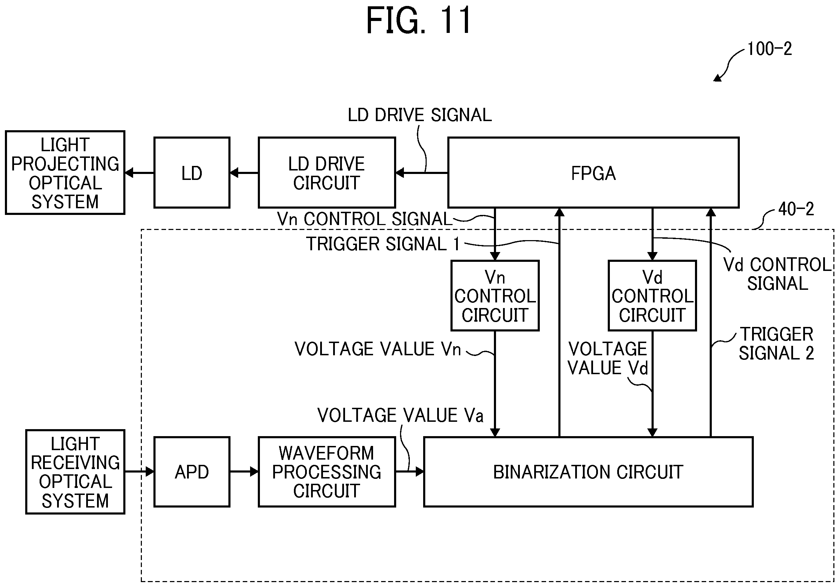

Next, as an example of the object detection apparatus 100, an object detection apparatus 100-2 according to a second embodiment provided with a noise measurement system is described with reference to FIG. 11. FIG. 11 mainly illustrates a hardware configuration of the light receiving system, and the synchronization system 50 and the object recognition system 47 are not illustrated.

### <Object Detection Apparatus According to Second Embodiment>

The object detection apparatus 100-2 according to the second embodiment includes a light receiving system 40-2 which is an example of the light receiving system 40. Here, the light receiving system 40-2 and an FPGA form the "light receiving apparatus" of the present disclosure.

The light receiving system 40-2 includes a noise measurement system that includes the APD (light receiving element) illustrated in FIG. 5B, a binarization circuit that functions as a comparing unit, and a Vd control circuit that functions as a part of the reference voltage generating unit 2.

That is, the signal processing circuit 42 is formed by the components other than the APD in the light receiving system 40-2.

As described above, the noise measurement system measures the noise level from the number of times events in which Va is larger than Vn (Va > Vn) for each Vn occur.

Here, the FPGA functions as the control system 46, the counting unit, and the noise level calculating unit. That is, the FPGA performs light projection control, distance calculation, noise calculation operation, etc.

The binarization circuit compares the voltage value Va output from the waveform processing circuit with the voltage value Vd (threshold voltage) output from the Vd control circuit, and when Va is larger than Vd (Va > Vd), outputs the trigger signal 2 as a detection signal to the FPGA.

The FPGA counts the number of times the trigger signals 1 are input for each Vn, calculates the noise level based on the counted number, and outputs the calculated value and the Vd control signal (rectangular pulse signal) to the Vd control circuit.

While the level of the Vd control signal from the FPGA is high, the Vd control circuit sets an appropriate voltage value Vd (threshold voltage) in accordance with the calculated value of the noise level from the FPGA, and outputs the set value to the binary circuit.

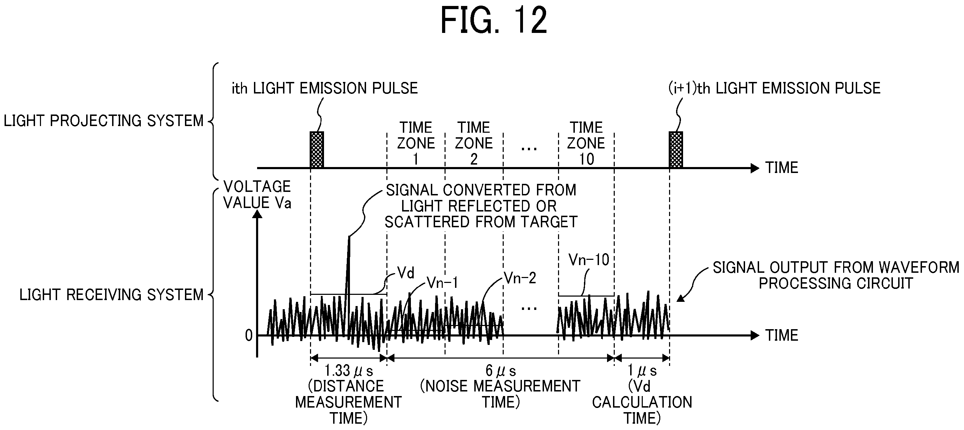

Next, an example of operation timing of the object detection apparatus 100 according to the present embodiment is described with reference to FIG. 12.

Here, as illustrated in FIG. 12, a configuration in which light emitting pulses are repeatedly emitted from the LD 11 in each scanning event with respect to the effective scanning area is assumed, and an emission interval (i.e., time from the leading edge of a light emitting pulse to the next leading edge of the light emitting pulse) of the LD 11 is set to 8.33 µs.

The longest detection distance of the target assumed for the object detection apparatus 100 is 200 m, which is 1.33 µs when converted to the round trip time of light.

Here, in each scanning event, time from the ith light emitting pulse (the ith light emitting pulse counted from the first light emitting pulse) until 1.33 µs elapses is set as "distance measurement time" used for measuring the distance to the target.

Then, time until 6 µs elapses from the end of the distance measurement time is set as "noise measurement time." The noise measurement time is a pulse width of the Vn control signal.

Here, the noise measurement time is divided into 10 time zones (i.e., time zone 1 to time zone 10),the threshold Vn for noise measurement is set for each of the time zones (Vn-1 to Vn-10 in FIG. 12),the number of times events in which Va is larger than Vn (Va> Vn) occur is counted, and the counted numbers are accumulated in the storage unit.

Here, for example, Vn is controlled in the following manner: Vn in the first time zone 1 is 10 mV (Vn-1), the value of Vn is increased by 10 mV in each progress of the time zone, and in the last time zone 10, Vn is 100 mV (Vn-10).

Here, 100 mV, which is an arbitrary value, matches the amplitude of the signal converted from by the light reflected by the target with a reflectance of 10% at 200 m, which is the longest detection distance assumed for the object detection apparatus 100. That is, if Vd is 100 mV or smaller, information on a target with a reflectance of 10% can be detected accurately.

Further, time from the end of the noise measurement time after the ith light emitting pulse is emitted until the (i+1)th light emitting pulse is emitted (1 µs) is set to be "Vd calculation time."

The Vd calculation time is the pulse width of the Vd control signal. Regarding the Vd calculation time, the value of Vd used in the distance measurement time which is the time from the ith light emitting pulse is emitted until the (i+1)th light emitting pulse is emitted in the next scanning event is determined. That is, the value of Vd used for distance measurement in the same scanning position (same light projection direction) in the effective scanning area is determined.

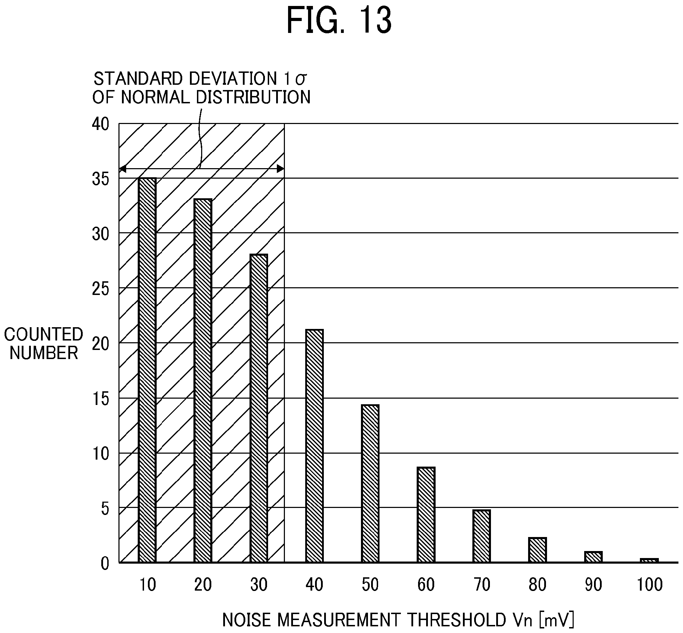

During the noise measurement time, the number of times events in which Va is larger than Vn (Va > Vn) at each stage (each time zone) occur (counted number) when Vn is varied in 10 steps as described above are accumulated in the storage unit. A histogram as illustrated in FIG. 13 is created based on the counted number for each Vn.

When a normal distribution is fit to the histogram illustrated in FIG. 13, it is found that a standard deviation 1σ of the counted number is around 30 mV. That is, when Vd is set to 30 mV, probability of noise detection is 64%.

Also, when Vd is set to 60 mV, which is 2σ, probability of noise detection is about 9%.

Therefore, in the distance measurement time after the next light emitting pulse is emitted, by setting Vd = 60 mV, detect information on the target with a reflectance of about 10% located 200 m ahead can be accurately detected, and the probability of noise detection can be reduced to be low enough.

### <Object Detection Apparatus According to Third Embodiment>

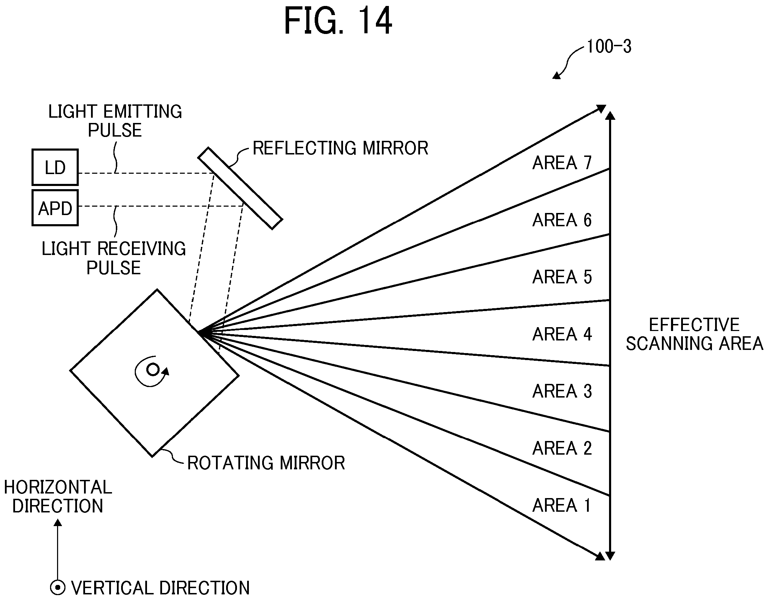

Next, an object detection apparatus 100-3 according to a third embodiment is described with reference to FIG. 14. In the object detection apparatus 100-3, the effective scanning area is divided into a plurality of areas in the horizontal direction and distance measurement, noise measurement, and Vd calculation are performed for each area.

In FIG. 14, the LD drive circuit 12, the light projecting optical system 13, the light receiving optical system 30, the signal processing circuit 42, the synchronization system 50, the control system 46, and the object recognition system 47 are not illustrated.

In the third embodiment, the light emitting pulse emitted from the LD and reflected by the reflecting mirror is deflected by a rotating mirror having four reflecting surfaces around the rotation axis, and the effective scanning area is scanned in the horizontal direction with the light emitting pulse.

It is assumed that the light receiving pulse from the target enters the APD (light receiving element) to be substantially coaxial with the light emitting pulse. Alternatively, a configuration in which the light receiving pulse is guided to be not coaxial with the light emitting pulse by using a prism or a beam splitter may be employed.

In the third embodiment, the effective scanning area is divided into seven areas (area 1 to area 7) in the horizontal direction. Each effective scanning area (hereinafter also referred to as "divided area") is irradiated with a single light emitting pulse, and operation timing is the same as that illustrated in FIG. 12.

There may be a case in which, even when the number of the plurality of regions obtained by dividing the effective scanning area in the horizontal direction is limited to 7, for example, eight or more times of pulsed light emission are performed in order to increase an angle resolution in the horizontal direction. Even in that case, the number of times of the pulsed light emissions to each area may be the same, and that the noise measurement time may also be the same.

Scanning in the horizontal direction may be performed by using, for example, a MEMS mirror instead of the rotating mirror. Instead of scanning in the horizontal direction, a plurality of light emitting elements such as LDs, LEDs, and VCSELs may be arranged in the horizontal direction, and pulsed light emission of a corresponding light emitting element may be performed with respect to each area of the effective scanning area in the horizontal direction.

In the third embodiment, the divided areas have the same width, but the divided areas may have different widths. In that case, the noise measurement time may be varied in accordance with the time to scan each divided area.

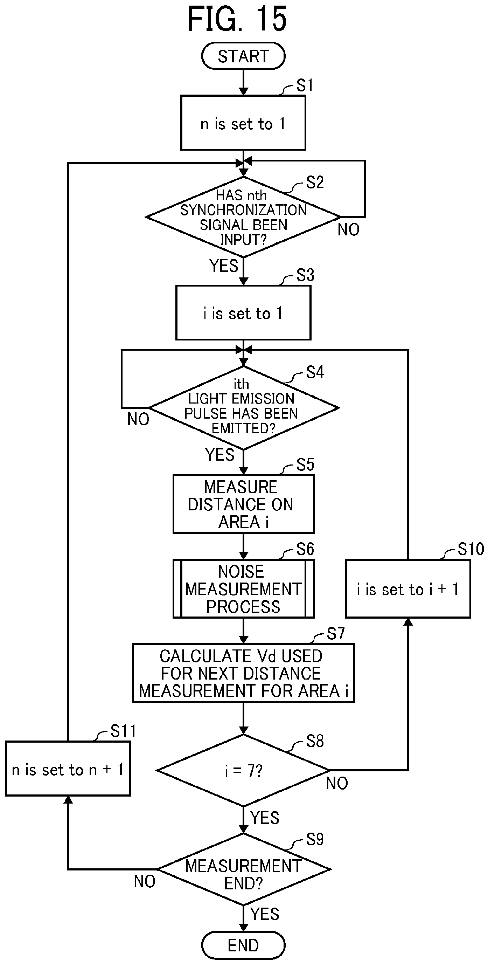

Hereinafter, the distance measurement process performed by the object detection apparatus 100-3 according to the third embodiment is described with reference to FIG. 15.

The object detection apparatus 100-3 according to the third embodiment has the same function as that of the object detection apparatus 100-1 according to the first embodiment and the same hardware configuration as that of the object detection apparatus 100-2 according to the second embodiment.

A flowchart illustrated in FIG. 15 is based on a processing algorithm executed by the control system 46 in the first embodiment (FPGA in the second embodiment). The distance measurement process is started when power is supplied to the object detection apparatus 100-3.

Here, each time a synchronization signal is input, the control system 46 generates an LD drive signal having seven pulses, divides the effective scanning area into seven areas, and performs distance measurement, noise measurement, and Vd calculation.

At this time, the control system 46 manages distance measurement time, noise measurement time, and Vd calculation time in the time from a leading edge of one pulse of the LD drive signal to a leading edge of the next pulse by using a built-in timer (see FIG. 12).

In a first step S1, n is set to 1.

In the next step S2, whether the nth synchronization signal (nth synchronization signal counted from the first synchronization signal) has been input is determined. If the determination in step S2 is affirmative, the process proceeds to step S3, and if the determination in step S2 is negative, the same determination is made again. The nth synchronization signal serves as a trigger for starting the nth scanning event.

In step S3, i is set to 1.

In the next step S4, whether the ith light emitting pulse (the ith light emitting pulse emitted in the nth scanning event) has been emitted is determined. More specifically, whether the ith pulse of the LD synchronization signal generated in accordance with the nth synchronization signal has been input to the LD drive circuit 12 is determined. If the determination in step S4 is affirmative, the process proceeds to step S5, and if the determination in step S4 is negative, the same determination is made again.

In step S5, distance measurement is performed on an area i.

More specifically, in the distance measurement time (see FIG. 12), a distance to a target located in the area i is measured with the distance measurement threshold Vd being an initial value (a default value previously stored in the storage unit) or being a later-described setting value.

In the next step S6, a "noise measurement process" is performed. More specifically, the FPGA outputs the Vn control signal to the Vn control circuit at the end of the distance measurement time that is immediately after the leading edge of the ith light emitting pulse and, while the level of the Vn control signal is high, i.e., during the noise measurement time (see FIG. 12), the level of the noise included in the signal output from the waveform processing circuit is measured for each voltage value Vn controlled by the Vn control circuit. Details of the noise measurement process are described later.

In step S7, Vd used for the next distance measurement for the area i is calculated and set. More specifically, the FPGA outputs the Vd control signal to the Vd control circuit at the end of the noise measurement time in the noise measurement process of step S6 and, while the level of the Vd control signal is high, i.e., during the Vd calculation time (see FIG. 12), for the area i, a Vd that is appropriate for the area i is calculated and set based on the noise level obtained by executing the noise measuring process in step S6. The set value is used when step S5 is executed in the next loop (i.e., when distance measurement is performed for the same area i).

In the next step S8, whether i = 7 is determined. If the determination in step S8 is affirmative, the process proceeds to step S9, and if the determination in step S8 is negative, the process proceeds to step S10.

In step S9, whether to end the measurement is determined. More specifically, the determination in step S9 is affirmative if the power supply to the object detection apparatus 100 has been stopped, and is negative if the power supply to the object detection apparatus 100 has not been stopped. If the determination in step S9 is affirmative, the process flow is ended, and if the determination in step S9 is negative, the process proceeds to step S11.

In step S10, i is incremented. When step S10 is executed, the process returns to step S4.

In step S11, n is incremented. When step S11 is executed, the process returns to step S2.

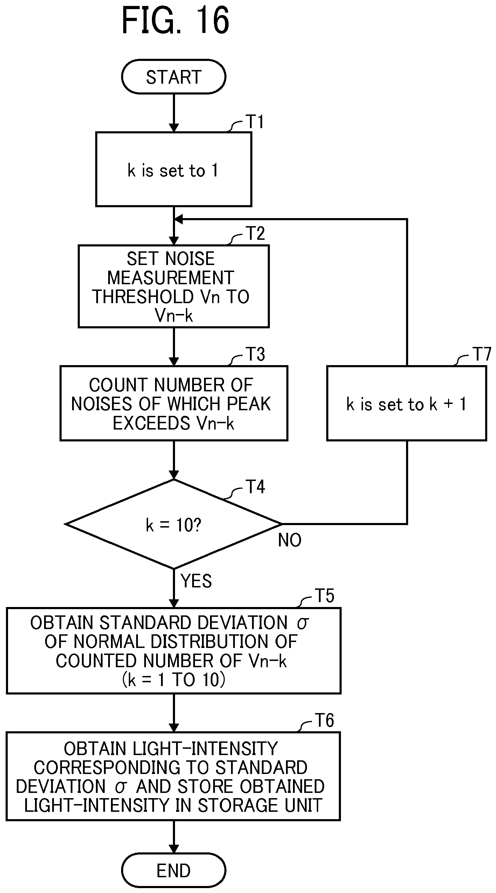

Next, the noise measurement process (step S6 in FIG. 15) is described with reference to the flowchart in FIG. 16.

In a first step T1, K is set to 1. "K" corresponds to each of time periods (see FIG. 12) divided from the noise measurement time.

In the next step T2, the threshold Vn for noise measurement is set to Vn-k.

In the next step T3, the number of noises of which peak has exceeded Vn-k is counted. More specifically, the number of times the trigger signals 2 are input is counted. Alternatively, the number of times the leading edge of noise crosses Vn-k or the number of times the falling edge of noise crosses Vn-k may be counted.

In the next step T4, whether k = 10 is determined. If the determination in step T4 is affirmative, the process proceeds to step T5, and if the determination in step T4 is negative, the process proceeds to step T7.

In step T5, the standard deviation σ of the normal distribution of the counted number at Vn-k (k = 1 to 10) is obtained.

In the next step T6, light-intensity of light corresponding to the standard deviation σ obtained in step T5 is obtained. More specifically, referring to the relationship illustrated in FIG. 8 previously stored in the storage unit, light-intensity of light corresponding to the standard deviation σ is obtained.

In step T7, k is incremented. When step T7 is executed, the process returns to step T2.

When the effective scanning area is divided into a plurality of areas in the vertical direction and distance measurement, noise measurement, and Vd calculation are performed for each area, a plurality of light emitting elements may be arranged in the vertical direction or a plurality of light receiving elements may be arranged in the vertical direction.

### <Object Detection Apparatus According to Fourth Embodiment>

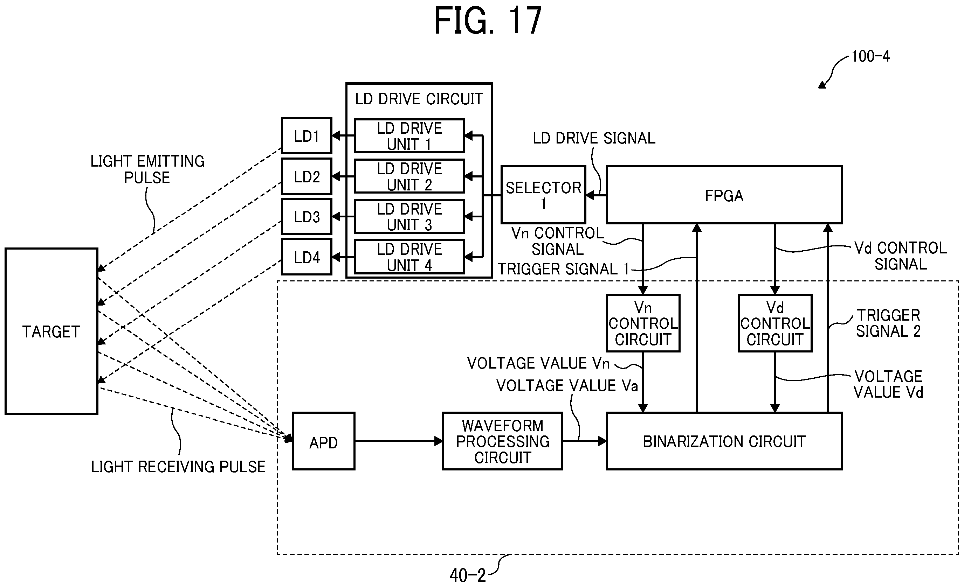

Hereinafter, as an example of the object detection apparatus 100 of the present embodiment, an object detection apparatus 100-4 according to a fourth embodiment that includes an LD array and an APD is described with reference to FIG. 17. In LD array, a plurality of (for example, four) LDs as light emitting elements are arranged in the vertical direction. The APD is provided as a single light receiving element.

The object detection apparatus 100-4 according to the fourth embodiment has the same hardware configuration as that of the object detection apparatus 100-2 according to the second embodiment except that the object detection apparatus 100-4 includes the LD array in which an LD 1 to an LD 4 are arranged in the vertical direction and a and selector 1 as illustrated in FIG. 17, and that the LD drive circuit includes an LD drive unit 1 to an LD drive circuit 4 corresponding to the LD 1 to the LD 4, respectively.

Each of the LD drive units includes a capacitor that supplies a current to the corresponding LD, a power source that applies a voltage between electrode plates of the capacitor, and a transistor that switches conduction/non-conduction between the LD and the capacitor.

While signals are being applied to the transistor in each LD drive unit, the LD and the capacitor corresponding to each other are conducted, the capacitor discharges, and a current flows through the LD.

When no signal is being applied to the transistor in each LD drive unit, the LD and the capacitor corresponding to each other are not conducted, and the capacitor is charged by the power source.

The selector 1, connected between the FPGA and the LD drive circuit, outputs the LD drive signal output from the FPGA to the transistor of the LD drive unit 1 as it is (without delay),outputs a signal obtained by delaying the LD drive signal by time t1 to the transistor of the LD drive unit 2, outputs a signal obtained by delaying the LD drive signal by time t2 (t2 > t1) to the transistor of the LD drive unit 3, and outputs a signal obtained by delaying the LD drive signal by time t3 (t3 > t2) to the transistor of the LD drive unit 4. In this manner, the LD 1 to the LD 4 can be turned on in this order.

In the object detection apparatus 100-4 according to the fourth embodiment, by sequentially turning on, for example, the four LDs (LD 1 to LD 4) arranged in the vertical direction, reflected light and scattered light from four different portions of the target are received at different timings by a single APD. An operation timing of the apparatus may be the same as in FIG. 12.

Therefore, information on the four different portions of the target can be accurately detected. Instead of the LD array, an LED array in which a plurality of LEDs as light emitting elements are arranged in the vertical direction, or a VCSEL array in which a plurality of VCSELs as light emitting elements are arranged in the vertical direction may be used.

As the light receiving element, a PD may be used instead of the APD.

### <Object Detection Apparatus According to Fifth Embodiment>

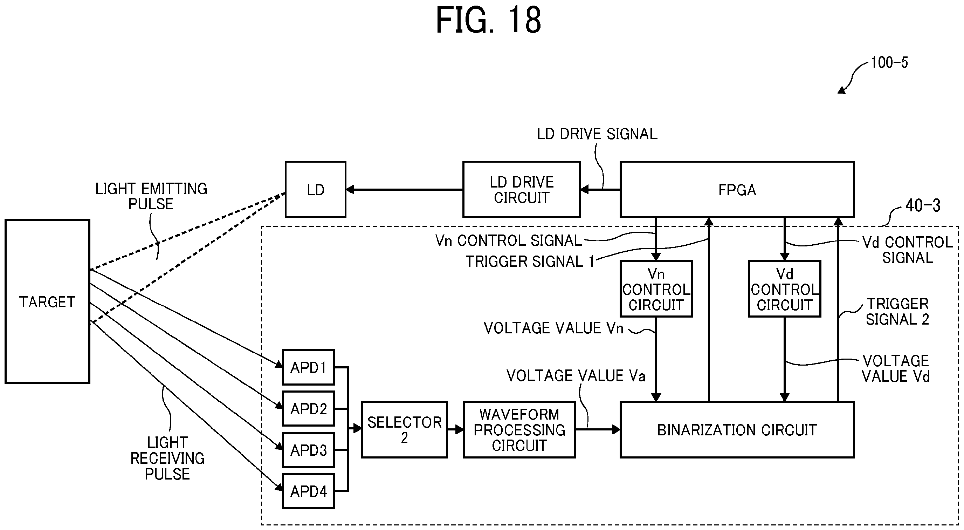

Hereinafter, as an example of the object detection apparatus 100 of the present embodiment, an object detection apparatus 100-5 according to a fifth embodiment that includes an LD and an APD array is described with reference to FIG. 18. The LD is provided as a single light receiving element. In the APD array, a plurality of (for example, four) APDs as light emitting elements are arranged in the vertical direction.

The object detection apparatus 100-5 according to the fifth embodiment has the same hardware configuration as that of the object detection apparatus 100-2 according to the second embodiment except that the light receiving system of the object detection apparatus 100-5 includes an APD array in which four APDs (APD 1 to APD 4) are arranged in the vertical direction and a selector 2.

The selector 2, which is connected between the APD array and the waveform processing circuit, outputs a current output from the APD 1 to the waveform processing circuit as it is (without delay),outputs a current obtained by delaying the current output from the APD 2 by time t1 to the waveform processing circuit, outputs a current obtained by delaying the current output from the APD 3 by time t2 (t2 > t1) to the waveform processing circuit, and outputs a current obtained by delaying the current output from the APD 4 by time t3 (t3 > t2) to the waveform processing circuit. In this manner, the currents output from the APD 1 to APD 4 can be sequentially processed.

The object detection apparatus 100-5 according to the fifth embodiment widely radiates a light emitting pulse from the LD on the target, substantially simultaneously receives, by the APD 1 to the APD 4, reflected light and scattered light from the four different portions in the vertical direction of the target, and outputs the currents output from the APD 1 to the APD 4 to the waveform processing circuit at different timings via the selector.

Therefore, information on the four different portions in the vertical direction of the target can be accurately detected.

Instead of the APD array, a PD array in which a plurality of PDs as light receiving elements are arranged in the vertical direction may be used.

Further, as a light emitting element, an LED or a VCSEL may be used instead of the LD.

In the four and the fifth embodiments described above, the target is divided into four areas in the vertical direction and four light emitting elements or four light receiving elements are arranged in the vertical direction to detect information. Alternatively, two light emitting elements may be arranged in the vertical direction and, in addition, two light receiving elements may be arranged in the vertical direction.

Further, in FIGS. 2 and 14, the rotating mirror of the rotating mirror may be disposed horizontally and the optical scanning in the vertical direction may be performed by using the rotating mirror. In this case, by arraying a plurality of light emitting elements and a plurality of light receiving elements in the horizontal direction, object information can be detected by two-dimensionally dividing the target.

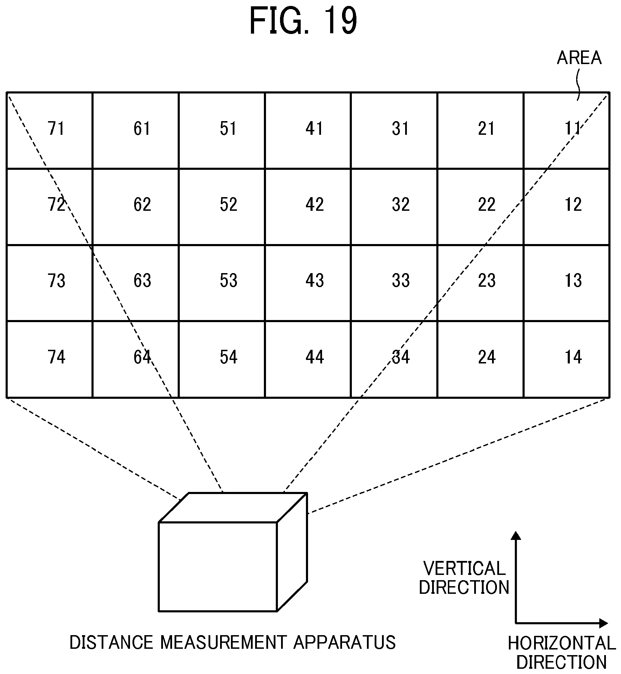

When, for example, detecting object information by two-dimensionally dividing the effective scanning area into seven areas in the horizontal direction and into four areas in the vertical direction (see FIG. 19),the configuration of the object detection apparatus according to the third embodiment (see FIG. 14) may be combined with the configuration of the object detection apparatus according to the fourth embodiment (see FIG. 17) or the configuration of the object detection apparatus according to the fifth embodiment (see FIG. 18).

That is, optical scanning in the horizontal direction is performed by using the rotating mirror, and area division in the vertical direction is performed by arranging a plurality of light emitting elements or a plurality of light receiving elements in the vertical direction.

An operation example when a plurality of light emitting elements 1, 2, 3, and 4 are arranged in this order in the vertical direction from a higher position to a lower position is described with reference to FIG. 19.

First, the light emitting element 1 is turned on and areas 11, 21, 31, 41, 51, 61, and 71 are scanned in this order. Next, the light emitting element 2 is turned on and areas 12, 22, 32, 42, 52, 62, and 72 are scanned in this order. Then, the light emitting element 3 is turned on and areas 13, 23, 33, 43, 53, 63, and 73 are scanned in this order. Then, the light emitting element 4 is turned on and areas 14, 24, 34, 44, 54, 64, and 74 are scanned in this order.

Alternatively, the light emitting elements 1 to 4 may be sequentially turned in a single scanning event. An example is as follows. In the first scanning event, the areas 11, 22, 33, 44, 51, 62, and 73 are scanned in this order. In the second scanning event, the areas 21, 32, 43, 54, 61, and 72 are scanned in this order. In the third scanning event, the areas 31, 42, 53, 64, and 71 are scanned in this order. In the fourth scanning event, the areas 41, 52, 63, and 74 are scanned in this order. In the fifth scanning event, the areas 12, 23, and 34 are scanned in this order. In the sixth scanning event, the areas 13, and 24 are scanned in this order. In the seventh scanning event, the area 14 is scanned.

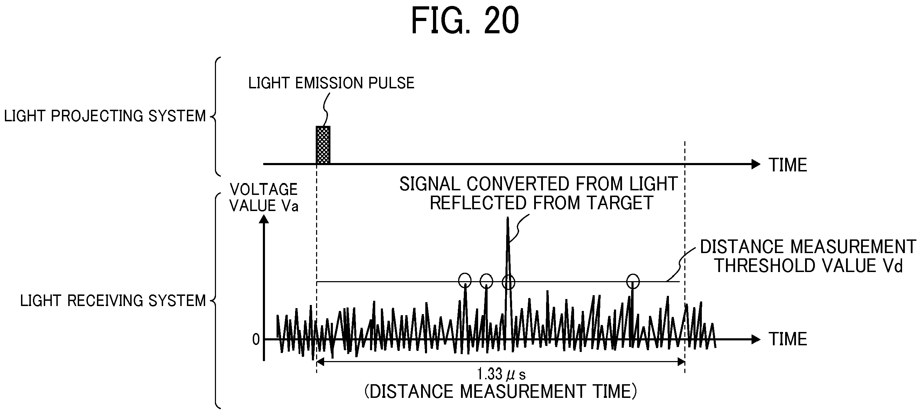

As illustrated in FIG. 20, when the noise level (the level of the noise), in addition to the peak of the signal converted from the light reflected or scattered from the target, exceeds the distance measurement threshold Vd, an object may be erroneously detected in measurement although no object actually exists.

As described above, noise is produced randomly in time. In contrast, when the object detection apparatus and the target are fixed to each other, the time at which the signal is detected is always constant even when measurement is repeated.

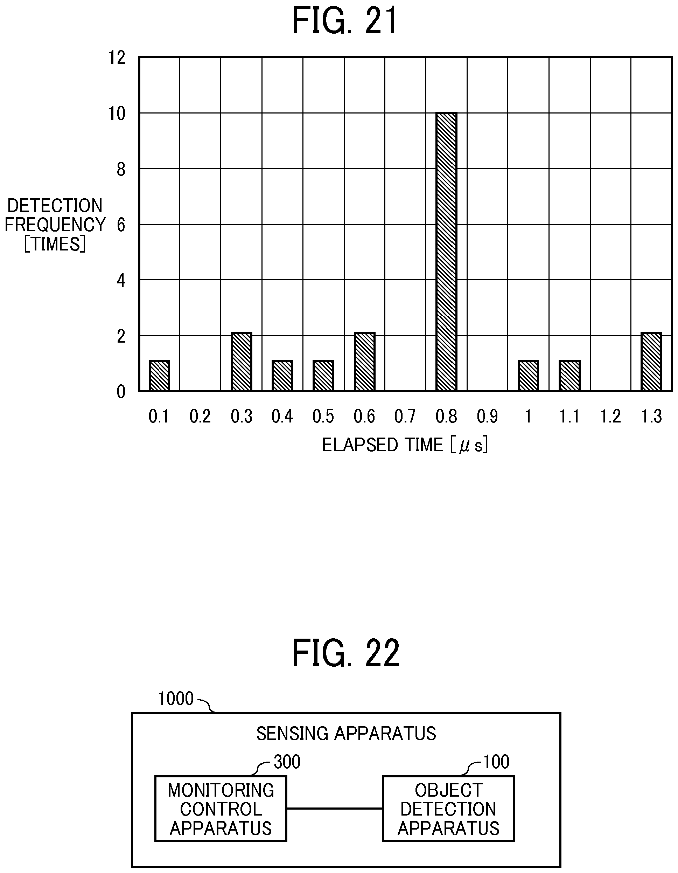

Therefore, a frequency of occurrence of events in which Va is larger than Vn (Va > Vn) is converted into a histogram with respect to elapsed time from the start of pulsed light emission (leading edge of the light emitting pulse) as illustrated in FIG. 21. Here, the number of times the pulsed light emission is to be repeated is 10. Detection frequency at the elapsed time of 0.8 µs is significantly higher than those of other times. Therefore, it can be estimated that this elapsed time is the time at which the signal converted from the reflected light from the target is detected. Thus, the distance to the target can be calculated to be 0.8 µs × c (light speed)/2 = 120 m.

FIG. 22 illustrates a sensing apparatus 1000 that includes the object detection apparatus 100. The sensing apparatus 1000, mounted in a vehicle (mobile object), includes the object detection apparatus 100 and a monitoring control apparatus 300 that is electrically connected to the object detection apparatus 100. The object detection apparatus 100 is mounted in the vicinity of a bumper or in the vicinity of a rear-view mirror of the vehicle. Based on a detection result of the object detection apparatus 100, the monitoring control apparatus 300 estimates shape and size of the object, calculates position information of the object, calculates movement information, recognizes type of the object, and the like, and determines whether a danger exists. If the monitoring control apparatus 300 determines that a danger exists, the monitoring control apparatus 300 issues an alert such as an alarm to an operator of the moving object for attention, issues an instruction to a steering control unit of the moving object for moving a steering wheel to avoid a danger, and issues an instruction to the ECU of the moving object for braking. The sensing apparatus 1000 receives power supply from, for example, a vehicle battery.

The monitoring control apparatus 300 may be provided integrally with the object detection apparatus 100, or may be provided separately from the object detection apparatus 100. Further, the monitoring control apparatus 300 may perform at least a part of control performed by the ECU.

The light receiving apparatus according to the present embodiment described above includes: a light receiving unit including a light receiving element configured to receive light and photoelectrically convert the light into signals, and a waveform processing circuit; a comparing unit configured to compare voltage values Va (signal value) of the signals output from the light receiving unit with a voltage value Vn (variable threshold), and output signals indicating a comparison result; a reference voltage generating unit 1 (threshold varying unit) capable of varying the voltage value Vn; a counting unit configured to count the number of times signals indicating that the voltage value Va is larger than the voltage value Vn are output from the comparing unit for each voltage value Vn; and a noise level calculating unit (calculating unit) configured to calculate a level of a noise included in the signal output from the light receiving unit based on the counted number (count result) by the counting unit by calculating a standard deviation of the normal distribution obtained from the counting result in the counting unit.

Here, "the number of times signals indicating that the voltage value Va is larger than the voltage value Vn are output from the comparing unit" is, for example, the number of binary signals (rectangular pulse signals) when a comparator binarizes, with reference to the voltage value Vn, signals (analog signals) output from the light receiving unit.

The "noise" here includes not only the shot noise induced by light but also a circuitous thermal noise, and the like.

In the light receiving apparatus according to the present embodiment, the level of the noise included in the signal output from the light receiving unit can be estimated (by using, for example, a comparator and a counter) without using a dedicated noise detection apparatus.

That is, according to the light receiving apparatus of the present embodiment, the level of the noise included in electrical signals output from the light receiving unit can be measured while substantially avoiding upsizing of the light receiving apparatus.

Further, there is no need to use an A-D converter or the like to measure the noise level, whereby an increase in cost can be prevented.

An A-D converter can measure a level of an input signal when, for example, the signal has a voltage value of 0 V or greater. However, if a threshold voltage is to be fixed (constant) in a comparator, for example, it is not even able to be confirmed whether an input signal has been input unless the threshold voltage is set to be equal to or lower than the voltage value of the input signal.

The reference voltage generating unit 1 may vary the voltage value Vn in a plurality of time zones within the noise measurement time (specified time). The noise level calculating unit may calculate the noise level from the counted number in the counting unit with respect to the voltage value Vn for each time zone.

Detection probability of temporally random noise is based on the normal distribution. For example, when the noise measurement time is divided into a plurality of equal time zones and the voltage value Vn is varied in a uniform width for each time zone, a distribution of the number of times noise is detected with respect to Vn fits the normal distribution. It is therefore possible to estimate how high the voltage value Vn can cause how high the noise detection probability and, eventually, to obtain the noise level.

Therefore, the noise level calculating unit calculates the noise level by using the standard deviation of the normal distribution obtained from the count result of the counting unit.

In a first aspect, the object detection apparatus 100 according to the present embodiment includes: a light projection system 10 (light projecting unit) that includes a light emitting element; and a light receiving apparatus configured to receive, by the light receiving element, the light projected from the light projection system 10 and is reflected or scattered by the object.

In this case, since the object detection threshold Vd (voltage value Vd) can be set based on the noise level measured by the light receiving apparatus, for example, detection of distant objects and low-reflectance objects and prevention of erroneous detection due to noise can be implemented at the same time.

In a second aspect, the object detection apparatus 100 according to the present embodiment is a distance measurement apparatus that includes: the object detection apparatus according to the first aspect; and an operating unit (a part of the control system 46) configured to calculate a time difference between the timing at which light emission by the light emitting element is started and the timing at which the signal indicating that the voltage value Va is larger than the voltage value Vd is output from the comparing unit, and output 1/2 of a converted value obtained by converting the time difference into a distance in accordance with the time difference or a value based on the time difference. Here, "the timing at which the signal indicating that the voltage value Va is larger than the voltage value Vd is output from the comparing unit" means, for example, a leading edge or a falling edge of the binary signal (rectangular pulse signal) of the comparator as the comparing unit, or timing based on at least one of the leading edge and the falling edge (for example, timing between the leading edge and the falling edge).

In this case, since the distance measurement threshold Vd (voltage value Vd) can be set based on the noise level measured by the light receiving apparatus, for example, distance measurement of distant objects and low-reflectance objects and prevention of erroneous detection due to noise can be implemented at the same time.

The light receiving apparatus may include a reference voltage generating unit 2 (threshold setting unit) that sets the voltage value Vd (setting threshold) based on the calculation result in the noise level calculating unit.

The light projection system 10 may sequentially project light onto a plurality of areas obtained by dividing a light projection area. In a time period from when the light is projected onto one of the plurality of areas to when the light is projected onto a next area, distance measurement time (time during which the operating unit performs operation), noise measurement time (time during which the light receiving apparatus measures noise), and Vd calculation time (time during which the reference voltage generating unit 2 sets the voltage value Vd) may be included. In this case, distance measurement and appropriate setting of the voltage value Vd can be performed for each area.

By setting the voltage value Vd to an appropriate value for each area, detection of distant objects and low-reflectance objects and prevention of erroneous detection due to noise can be implemented at the same time for each area.

The reference voltage generating unit 1 may vary the voltage value Vn in the plurality of time zones within the noise measurement time. The noise level calculating unit may calculate the noise level from the counted number in the counting unit with respect to the voltage value Vn for each time zone.

The plurality of areas may be obtained by one-dimensionally dividing the light projection area in the horizontal direction or the vertical direction.

The level of the noise included in the signal output from the light receiving unit varies depending on the position in the horizontal direction and the vertical direction within the light projection area of the laser radar. Therefore, for example, control may be performed such that Vn is increased in an area with a larger noise and Vn is decreased in an area with a smaller noise among the plurality of areas obtained by one-dimensionally dividing the light projection area in the horizontal direction or in the vertical direction.

The plurality of areas may be obtained by two-dimensionally dividing the light projection area in the horizontal direction and the vertical direction.

The level of the noise included in the signal output from the light receiving unit varies depending on the position in the horizontal direction and the vertical direction within the light projection area of the laser radar. Therefore, for example, control may be performed such that Vn is increased in an area with a larger noise among the plurality of areas obtained by two-dimensionally dividing the light projection area in the horizontal direction and in the vertical direction, and that Vn is decreased in an area with a smaller noise. In this manner, distances to distant objects and low-reflectance objects can be measured without detecting a noise as much as possible.

The object detection apparatus 100 as the distance measurement apparatus further includes a classifying unit (a part of the control system 46) that classifies, into a plurality of classes, the time difference for each signal output from the light receiving unit of which the voltage value Va is larger than the voltage value Vd each time of the plurality of times that the light is projected when the light projection system 10 projects light a plurality of times in the same direction. The operating unit may calculate the time difference based on a signal, of which the voltage value Va is larger than the voltage value Vd, output from the light receiving unit among signals output within an arbitrary time period each time light is projected and, based on a classification result in the classifying unit, may extract time during which light reciprocates between the object detection apparatus 100 and the object from the time difference for each output signal, and may output 1/2 of a converted value obtained by converting the time into a distance.

When a histogram or a frequency distribution table representing the number (frequency) of output signals in which Va for each class to which the time difference belongs is larger than Vd is generated, a detection frequency of the signals (true signals) converted from the reflected light and the scattered light from the target becomes significantly higher compared with a noise detection frequency. Therefore, it becomes possible to discriminate between noise from true signals.

The object detection apparatus 100 as the distance measurement apparatus further includes a classifying unit that classifies, into a plurality of classes, when the light projection system 10 projects light a plurality of times in the same direction, the converted value for each signal output from the light receiving unit of which the voltage value Va is larger than the voltage value Vd each time of the plurality of times the light is projected. The operating unit may calculate the time difference based on a signal, of which the voltage value Va is larger than the voltage value Vn output from the light receiving unit among signals output from the light receiving unit within an arbitrary time period each time light is projected and, based on a classification result in the classifying unit, may extract a reciprocating distance between the object detection apparatus 100 and the object from the converted value for each output signal, and may output 1/2 of the reciprocating distance.

Since a vehicle apparatus (mobile object apparatus) provided with the object detection apparatus 100 of the present embodiment and a vehicle (mobile object) in which the object detection apparatus 100 is mounted includes the light receiving apparatus having improved object detection performance, a vehicle apparatus with improved collision safety can be implemented.

Since a vehicle apparatus (mobile object apparatus) provided with the object detection apparatus 100 as a distance measuring apparatus of the present embodiment and a vehicle (mobile object) in which the object detection apparatus 100 is mounted includes the light receiving apparatus capable of improving distance measurement performance, a vehicle apparatus with significantly improved collision safety can be implemented.

According to the sensing apparatus 1000 provided with the object detection apparatus 100, and the monitoring control apparatus 300 that obtains object information (at least one of presence/absence of an object, a position of the object, a moving direction of the object, and a moving speed of the object) based on the output of the object detection apparatus 100, object information can be obtained accurately, quickly, and reliably.

Further, the sensing apparatus 1000 is mounted in a mobile object, and the monitoring control apparatus 300 can provide information effective in avoiding a danger to, for example, a steering control system, a speed control system, etc. of the mobile object in order to determine whether a danger exists based on at least one of the position information and the movement information of the object.

According to the vehicle apparatus (mobile object apparatus) provided with the sensing apparatus 1000 and a vehicle (mobile object) in which the sensing apparatus 1000 is mounted, a vehicle apparatus having improved collision safety can be implemented.

The noise measuring method according to the present embodiment includes: receiving light and photoelectrically converting the light to electrical signals and outputting the electrical signals; threshold-varying a voltage value Vn (threshold);comparing voltage values Va (signal values) of the electrical signals with the voltage value Vn (variable threshold) varied in the threshold-varying; counting the number of times comparison results indicating that the voltage value Va is larger than the voltage value Vn are obtained in the comparing; and calculating a level of a noise included in the electrical signals based on a count result in the counting by calculating a standard deviation of the normal distribution obtained from the counting result in the counting unit.

In this case, the level of the noise included in the signal output from the light receiving unit can be estimated (by using, for example, a comparator and a counter) without using a dedicated noise detection apparatus.

That is, according to the noise measuring method of the present embodiment, the level of the noise included in electrical signals output from the light receiving unit can be measured by using a simple circuit configuration.

The object detecting method according to the present embodiment includes: first outputting of receiving light and photoelectrically converting the light to electrical signals and outputting the electrical signals; threshold-varying a voltage value Vn (threshold);comparing voltage values Va (signal values) of the electrical signals output in the first outputting with the voltage value Vn (variable threshold) varied in the varying; counting the number of times comparison results indicating that the voltage value Va is larger than the voltage value Vn are obtained in the comparing; and calculating a level of a noise included in the electrical signals based on a count result in the counting by calculating a standard deviation of the normal distribution obtained from the counting result in the counting unit; threshold-setting of setting a voltage value Vd (threshold) based on a calculation result in the calculation; light-projecting of turning on a light source and projecting light emitted from the light source; second outputting of receiving the light projected in the light-projecting and reflected by an object, photoelectrically converting the received light into electrical signals, and outputting the electrical signals; and comparing voltage values Va (signal values) of the electrical signals output in the second outputting with a voltage value Vd (set threshold) set in the threshold-setting.

In this case, the level of the noise included in the signal output from the light receiving unit can be estimated (by using, for example, a comparator and a counter) without using a dedicated noise detection apparatus.

That is, according to the object detecting method of the present embodiment, by setting the object detection threshold Vd (voltage value Vd) in accordance with the calculated noise level, for example, an object can be detected accurately by using a simple circuit configuration.

The distance measuring method according to the present embodiment includes: first outputting of receiving light and photoelectrically converting the light to electrical signals and outputting the electrical signals; threshold-varying a voltage value Vn (threshold);variable threshold-comparing of comparing voltage values Va (signal values) of the electrical signals output in the first outputting with the voltage value Vn (variable threshold) varied in the threshold-varying; counting the number of times comparison results indicating that the voltage value Va is larger than the voltage value Vn are obtained in the variable threshold-comparing; calculating a level of a noise included in the electrical signals based on a count result in the counting by calculating a standard deviation of the normal distribution obtained from the counting result in the counting unit; threshold-setting of setting a voltage value Vd (threshold) based on a calculation result in the calculation; light-projecting of turning on a light source and projecting light emitted from the light source; second outputting of receiving the light projected in the light-projecting and reflected or scattered by an object, photoelectrically converting the received or scattered light into electrical signals, and outputting the electrical signals; set threshold-comparing of comparing voltage values Va (signal values) of the electrical signals output in the second outputting with a voltage value Vd (set threshold) set in the threshold-setting; and outputting 1/2 of a conversion value obtained by converting a time difference between timing at which turning-on of a light source is started in the light-projecting and timing at which a comparison result indicating that the voltage value Va is larger than the voltage value Vd is obtained in the set threshold-comparing into a distance.

In this case, the level of the noise included in the signal output from the light receiving unit can be estimated (by using, for example, a comparator and a counter) without using a dedicated noise detection apparatus.

That is, according to the distance measuring method of the present embodiment, by setting the distance measurement threshold Vd (voltage value Vd) in accordance with the calculated noise level, for example, a distance to an object can be measured accurately by using a simple circuit configuration.

The configuration of the object detection apparatus 100 according to the above-described embodiment can be changed.

For example, in the above-described embodiment, the noise is measured each time pulsed light emission is performed, but the noise may be measured each of a plurality of pulsed light emissions.

In the above-described embodiment, Vd is calculated each time pulsed light emission is performed, but Vd may be calculated at every plurality of pulsed light emissions. In this case, Vd may be set based on an average value or a median of the noise levels measured each time pulsed light emission is performed or every plurality of pulsed light emissions.

Further, for example, the distance measurement time, the noise measurement time, and the Vd calculation time may be set to be between the scanning events (i.e., while scanning out of the effective scanning area). That is, distance measurement, noise measurement, and Vd calculation may be performed for each scanning event or every plurality of scanning events. In this case, Vd may be uniformly set for each scanning event or a plurality of scanning events.

When object information is to be detected by one-dimensionally dividing the effective scanning area in the vertical direction or the horizontal direction, or when object information is to be detected by two-dimensionally dividing the effective scanning area in the vertical direction and the horizontal direction, a plurality of light emitting elements and light receiving elements may be arranged in the vertical direction.

A noise measurement configuration and the noise measuring method in the light receiving apparatus according to the present embodiment may be applied to the synchronization system 50. In this case, the noise detection frequency in the binarization circuit 56 can be lowered, and the synchronization signal can be generated accurately.

Filters such as a low-pass filter and a high-pass filter may be incorporated in, for example, the waveform processing circuit. When an amplifier is incorporated in the waveform processing circuit, such a filter may be provided between the amplifier circuit and the binarization circuit. When no amplification circuit is incorporated in the waveform processing circuit, such a filter may be provided between the current-voltage converter circuit and the binarization circuit.

Although the light projection system 10 is a scanning system that uses the rotating mirror 26 as a deflector, the light projection system may be a non-scanning system that uses no deflector. That is, the projection system may at least include a light source, and may include a lens for adjusting a light projection area at the subsequent stage of the light source. In a non-scanning light projecting system, a light source array in which a plurality of light sources are arranged in an array may be used. Examples of such a light source array may include an LD array in which a plurality of LDs are arranged one-dimensionally or two-dimensionally, a VCSEL array in which VCSELs are arranged one-dimensionally or two-dimensionally, and the like.

Examples of an LD array in which a plurality of LDs are one-dimensionally arranged may include a stack type LD array in which a plurality of LDs are stacked or an LD array in which a plurality of LDs are arranged side by side.

If a VCSEL is used as each light source in the light source array, the light sources can be arranged more densely than when LDs are used as the light sources (i.e., the number of light emitting points in the array can be increased).

The light projecting optical system does not necessarily have to include a coupling lens, or may have other type of lens.

The light projecting optical system and the light receiving optical system do not necessarily have to include a reflecting mirror. That is, the light from the LD 11 may be made to enter the rotating mirror without following back the optical path.

The light receiving optical system does not necessarily have to include a light receiving lens, or may include other type of optical element (e.g., a condenser mirror).

In the embodiment described above, a vehicle is described as an example of a mobile object in which the object detection apparatus 100 is mounted. However, the mobile object may be, for example, an aircraft, a ship, or a robot.

The specific numerical values (including the number of divisions of the effective scanning area and the number of divisions of the noise measurement time) and the shape used in the description described above are examples only, and may be changed without departing from the scope of the present disclosure as defined by the appended claims.

As is obvious from the description described above, the object detection apparatus 100 (object detection apparatus, distance measurement apparatus), the sensing apparatus 1000, the vehicle apparatus (mobile object apparatus), the noise measuring method, the object detecting method, and the distance measuring method according to the embodiment described above are technologies using the Time of Flight (TOF) method, and can be widely used in, in addition to sensing in a mobile object, industrial fields such as motion capture technology, a range finder, three-dimensional shape measurement technology, and the like. That is, the light receiving apparatus, the object detection apparatus, and the distance measuring apparatus according to the present disclosure do not necessarily have to be mounted in a moving body.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention as defined by the appended claims.

## Claims

1. A light receiving apparatus, comprising:
a light receiving unit (40) including a light receiving element (41) configured to receive light and photoelectrically convert the light into signals;
a threshold varying unit configured to vary a threshold;
a comparing unit (56) configured to compare signal values of the signals output from the light receiving unit (40) with a variable threshold changed by the threshold varying unit, and output signals indicating a comparison result;
**characterized by** further comprising:
a counting unit configured to count, for each of the thresholds, a number of times that signals indicating that the signal value is larger than the variable threshold is output from the comparing unit (56); and
a calculating unit configured to calculate a level of a noise included in the output signals based on a count result in the counting unit by calculating a standard deviation of the normal distribution obtained from the counting result in the counting unit.

2. The light receiving apparatus according to claim 1, wherein the threshold varying unit is configured to vary the variable threshold in a plurality of time zones within a specified time, and the calculating unit is configured to calculate the level of the noise from a count result in the counting unit with respect to the variable threshold for each time period.

3. An object detection apparatus (100), comprising:
a light projecting unit (10) including a light emitting element (41); and
the light receiving apparatus according to any one of claims 1 or 2, wherein the light receiving element (41) is configured to receive in which the light projected from the light projecting unit (10) and reflected or scattered by an object.

4. A distance measurement apparatus, comprising:
the object detection apparatus (100) according to claim 3;
a threshold setting unit configured to set a threshold based on a calculation result in the calculating unit; and
an operating unit configured to calculate a time difference between timing at which light emission by the light emitting element is started and timing at which a signal indicating that the signal is larger than the threshold set by the threshold setting unit is output, and output 1/2 of a converted value obtained by converting the time difference into a distance in accordance with one of the time difference and a value based on the time difference.

5. The distance measurement apparatus according to claim 4, wherein:
the light projecting unit (10) is configured to sequentially project light onto a plurality of areas obtained by dividing a light projection area; and
in a time period from when the light is projected onto one of the plurality of areas to when the light is projected onto a next area, time during which the operating unit performs operation, time during which the light receiving apparatus measures the noise, and time during which the threshold setting unit sets the set threshold, are included.

6. The distance measurement apparatus according to claim 5, wherein:
the threshold varying unit is configured to vary the variable threshold in a plurality of time zones within a specified time; and
the calculating unit is configured to calculate the level of the noise from a count result in the counting unit with respect to the variable threshold for each time period.

7. The distance measurement apparatus according to claim 6, wherein
the plurality of areas is obtained by one-dimensionally dividing the light projection area in one of a horizontal direction and a vertical direction.

8. The distance measurement apparatus according to claim 6, wherein
the plurality of areas is obtained by two-dimensionally dividing the light projection area in the horizontal direction and the vertical direction.

9. The distance measurement apparatus according to any one of claims 4 to 8, further comprising
a classifying unit configured to classify, when the light projecting unit projects light a plurality of times in the same direction, the time difference for each of the output signal of which signal value is larger than the set threshold at the time of each of the plurality of times of light projection into a plurality of classes, wherein
the operating unit is configured to calculate the time difference based on an output signal of which the signal value is larger than the set threshold among the output signals within an arbitrary time period each time light is projected and,
based on a classification result in the classifying unit, extract time during which light reciprocates between the distance measurement apparatus and the object from the time difference for each output signal, and output 1/2 of a converted value obtained by converting the time into a distance.

10. The distance measurement apparatus according to any one of claims 4 to 8, further comprising
a classifying unit configured to classify, when the light projecting unit projects light a plurality of times in the same direction, the converted value for each signal output from the light receiving unit of which the signal value is larger than the set threshold each time of the plurality of times the light is projected into a plurality of classes, wherein
the operating unit is configured to calculate the time difference based on an output signal of which the signal value is larger than the set threshold among the output signals within an arbitrary time period each time light is projected and,
based on a classification result in the classifying unit, extract time during which light reciprocates between the distance measurement apparatus and the object from the time difference for each output signal, and output 1/2 of a converted value obtained by converting the time into a distance.

11. A mobile object apparatus comprising at least one of the object detection apparatus (100) according to claim 3, and the distance measurement apparatus according to any one of claims 4 to 10.

12. A noise measuring method comprising:
first outputting of receiving light and photoelectrically converting the light to electrical signals and outputting the electrical signals;
varying a threshold;
comparing signal values of the electrical signals output in the first outputting with a variable threshold varied in the varying;
counting a number of times comparison results indicating that the signal value is larger than the variable threshold is obtained in the comparing; and
calculating a level of a noise included in the electrical signals based on a count result in the counting by calculating a standard deviation of the normal distribution obtained from the counting result in the counting unit.

13. An object detecting method, comprising:
the noise measuring method according to claim 12;
setting a threshold based on a calculation result in the calculating;
turning on a light source and projecting light emitted from the light source;
second outputting of receiving the light projected in the light-projecting and reflected by the object, photoelectrically converting the received light into electrical signals, and outputting the electrical signals; and
comparing signal values of the electrical signals output in the second outputting with a set threshold set in the threshold-setting.

14. A distance measuring method comprising:
the noise measuring method according to claim 12;
setting a threshold based on a calculation result in the calculating;
turning on a light source and projecting light emitted from the light source;
receiving the light projected in the light-projecting and reflected or scattered by an object, photoelectrically converting the received or scattered light into electrical signals, and outputting the electrical signals;
comparing signal values of the electrical signals output in the second outputting with the set threshold set in the setting; and
outputting 1/2 of a conversion value obtained by converting a time difference between timing at which turning-on of a light source is started in the timing at which a comparison result indicating that the signal value is larger than the set threshold is output in the comparing into a distance.

## Patentansprüche

1. Lichtempfangseinrichtung, umfassend:
eine Lichtempfangseinheit (40), die ein Lichtempfangselement (41) beinhaltet, das dazu konfiguriert ist, Licht zu empfangen und das Licht fotoelektrisch in Signale umzuwandeln;
eine Schwellenvariationseinheit, die dazu konfiguriert ist, eine Schwelle zu variieren;
eine Vergleichseinheit (56), die dazu konfiguriert ist, Signalwerte der Signalausgänge von der Lichtempfangseinheit (40) mit einer variablen Schwelle zu vergleichen, die durch die Schwellenvariationseinheit geändert wird, und Signal auszugeben, die ein Vergleichsergebnis anzeigen;
**gekennzeichnet dadurch, dass** sie ferner umfasst:
eine Zähleinheit, die dazu konfiguriert ist, für jede der Schwellen eine Anzahl von Malen zu zählen, dass Signale, die anzeigen, dass der Signalwert größer als die variable Schwelle ist, aus der Vergleichseinheit (56) ausgegeben werden; und
eine Berechnungseinheit, die dazu konfiguriert ist, ein Niveau eines Rauschens, das in den Ausgabesignalen beinhaltet ist, auf Grundlage eines Zählergebnisses in der Zähleinheit durch das Berechnen einer Standardabweichung von der normalen Verteilung, die aus dem Zählergebnis in der Zähleinheit erhalten wird, zu berechnen.

2. Lichtempfangseinrichtung nach Anspruch 1, wobei
die Schwellenvariationseinheit dazu konfiguriert, die variable Schwelle in einer Mehrzahl von Zeitzonen innerhalb einer bestimmten Zeit zu variieren, und die Berechnungseinheit dazu konfiguriert ist, das Niveau eines Rauschens aus einem Zählergebnis in der Zähleinheit in Bezug auf die variable Schwelle für jeden Zeitraum zu berechnen.

3. Objekterkennungseinrichtung (100), umfassend:
eine Lichtprojektionseinheit (10), die ein Lichtemissionselement (41) beinhaltet; und
die Lichtempfangseinrichtung nach einem der Ansprüche 1 oder 2, wobei das Lichtempfangselement (41) dazu konfiguriert ist, das Licht zu empfangen, das von der Lichtprojektionseinheit (10) projiziert wird und von einem Objekt reflektiert oder gestreut wird.

4. Entfernungsmesseinrichtung, umfassend:
die Objekterkennungseinrichtung (100) nach Anspruch 3;
eine Schwelleneinstelleinheit, die dazu konfiguriert ist, eine Schwelle auf Grundlage eines Berechnungsergebnisses in der Berechnungseinheit einzustellen; und
eine Betriebseinheit, die dazu konfiguriert ist, eine Zeitdifferenz zwischen dem Zeitpunkt, an dem Lichtemission durch das Lichtemissionselement gestartet wird, und dem Zeitpunkt, an dem ein Signal, das anzeigt, dass das Signal größer als die Schwelle ist, die durch die Schwelleneinstelleinheit eingestellt wird, ausgegeben wird, und 1/2 eines umgewandelten Werts auszugeben, der erhalten wird, indem die Zeitdifferenz in eine Entfernung in Übereinstimmung mit einer/einem der Zeitdifferenz und eines Werts auf Grundlage der Zeitdifferenz umgewandelt wird.

5. Entfernungsmesseinrichtung nach Anspruch 4, wobei:
die Lichtprojektionseinheit (10) dazu konfiguriert ist, Licht sequenziell auf eine Mehrzahl von Flächen zu projizieren, die durch das Teilen einer Lichtprojektionsfläche erhalten werden; und
in einem Zeitraum, von wenn das Licht auf eine der Mehrzahl von Flächen projiziert wird, bis zu wenn das Licht auf eine nächste Fläche projiziert wird, Zeit, während derer die Betriebseinheit den Betrieb durchführt, Zeit, während derer die Lichtempfangseinrichtung das Rauschen misst, und Zeit, während derer die Schwelleneinstelleinheit die eingestellte Schwelle einstellt, beinhaltet sind.

6. Entfernungsmesseinrichtung nach Anspruch 5, wobei:
die Schwellenvariationseinheit dazu konfiguriert ist, um die variable Schwelle in einer Mehrzahl von Zeitzonen innerhalb einer spezifizierten Zeit zu variieren; und
die Berechnungseinheit dazu konfiguriert ist, das Niveau des Rauschens aus einem Zählergebnis in der Zähleinheit in Bezug auf die variable Schwelle für jeden Zeitraum zu berechnen.

7. Entfernungsmesseinrichtung nach Anspruch 6, wobei
die Mehrzahl an Flächen durch eindimensionales Teilen der Lichtprojektionsfläche in eine einer horizontalen Richtung und einer vertikalen Richtung erhalten wird.

8. Entfernungsmesseinrichtung nach Anspruch 6, wobei
die Mehrzahl an Flächen durch zweidimensionales Teilen der Lichtprojektionsfläche in die horizontale Richtung und die vertikale Richtung erhalten wird.

9. Entfernungsmesseinrichtung nach einem der Ansprüche 4 bis 8, ferner umfassend:
eine Klassifizierungseinheit, die dazu konfiguriert ist, die Zeitdifferenz, wenn die Lichtprojektionseinheit Licht eine Mehrzahl von Malen in dieselbe Richtung projiziert, für jedes des Ausgabesignals, von dem der Signalwert größer als die Einstellschwelle zu der Zeit jedes der Mehrzahl von Malen der Lichtprojektion in eine Mehrzahl von Klassen zu klassifizieren, wobei
die Betriebseinheit dazu konfiguriert ist, die Zeitdifferenz auf Grundlage eines Ausgabesignals, von dem der Signalwert größer ist als die eingestellte Schwelle unter den Ausgabesignalen innerhalb eines arbiträren Zeitraums jedes Mal, wenn Licht projiziert wird, zu berechnen, und
auf Grundlage eines Klassifizierungsergebnisses in der Klassifizierungseinheit, die Zeit, während derer sich Licht zwischen der Entfernungsmesseinrichtung und dem Objekt hin und her bewegt, aus der Zeitdifferenz für jedes Ausgabesignal zu extrahieren und 1/2 eines umgewandelten Werts auszugeben, der durch das Umwandeln der Zeit in eine Entfernung erhalten wird.

10. Entfernungsmesseinrichtung nach einem der Ansprüche 4 bis 8, ferner umfassend:
eine Klassifizierungseinheit, die dazu konfiguriert ist, den umgewandelten Wert, wenn die Lichtprojektionseinheit Licht eine Mehrzahl von Malen in dieselbe Richtung projiziert, für jedes Ausgabesignal, das von der Lichtempfangseinheit ausgegeben wird und von dem der Signalwert größer ist als die eingestellte Schwelle jedes Mal der Mehrzahl von Malen, wenn Licht projiziert wird, in eine Mehrzahl von Klassen zu klassifizieren, wobei
die Betriebseinheit dazu konfiguriert ist, die Zeitdifferenz auf Grundlage eines Ausgabesignals, von dem der Signalwert größer ist als die eingestellte Schwelle unter den ausgegebenen Signalen innerhalb eines arbiträren Zeitraums, jedes Mal, wenn Licht projiziert wird, zu berechnen, und
auf Grundlage eines Klassifizierungsergebnisses in der Klassifizierungseinheit, die Zeit, während derer sich Licht zwischen der Entfernungsmesseinrichtung und dem Objekt hin und her bewegt, aus der Zeitdifferenz für jedes Ausgabesignal zu extrahieren und 1/2 eines umgewandelten Werts auszugeben, der durch das Umwandeln der Zeit in eine Entfernung erhalten wird.

11. Mobile Objekteinrichtung, umfassend wenigstens eine der Objekterkennungseinrichtung (100) nach Anspruch 3 und der Entfernungsmesseinrichtung nach einem der Ansprüche 4 bis 10.

12. Rauschmessverfahren, umfassend:
erstes Ausgeben von Empfangslicht und fotoelektrisches Umwandeln des Lichts in elektrische Signale und Ausgeben der elektrischen Signale;
Variieren einer Schwelle;
Vergleichen von Signalwerten der elektrischen Signale, die in dem ersten Ausgeben ausgegeben werden, mit einer variablen Schwelle, die in dem Variieren variiert wird;
Zählen einer Anzahl von Malen, bei denen Vergleichsergebnisse, die anzeigen, dass der Signalwert größer als die variable Schwelle ist, bei dem Vergleichen erhalten werden; und
Berechnen eines Niveaus eines Rauschens, das in den elektrischen Signalen beinhaltet ist, auf Grundlage eines Zählergebnisses in dem Zählen, durch das Berechnen einer Standardabweichung der normalen Verteilung, die aus dem Zählergebnis in der Zähleinheit erhalten wird.

13. Obj ekterkennungsverfahren, umfassend:
das Rauschmessverfahren nach Anspruch 12;
Einstellen einer Schwelle auf Grundlage eines Berechnungsergebnisses in dem Berechnen;
Anschalten einer Lichtquelle und Projizieren von Licht, das von der Lichtquelle emittiert wird;
zweites Ausgeben des Empfangens des Lichts, das in dem Lichtprojizieren projiziert wird und von dem Objekt reflektiert wird, fotoelektrisches Umwandeln des empfangenen Lichts in elektrische Signale und Ausgeben der elektrischen Signale; und
Vergleichen von Signalwerten der elektrischen Signale, die in dem zweiten Ausgeben ausgegeben werden, mit einer eingestellten Schwelle, die in dem Schwelleneinstellen eingestellt wird.

14. Entfernungsmessverfahren, umfassend.
das Rauschmessverfahren nach Anspruch 12;
Einstellen einer Schwelle auf Grundlage eines Berechnungsergebnisses in dem Berechnen;
Anschalten einer Lichtquelle und Projizieren von Licht, das von der Lichtquelle emittiert wird;
Empfangen des Lichts, das in dem Lichtprojizieren projiziert wird und von dem Objekt reflektiert oder gestreut wird, fotoelektrisches Umwandeln des empfangenen oder gestreuten Lichts in elektrische Signale und Ausgeben der elektrischen Signale; und
Ausgeben von 1/2 eines Umwandlungswerts, der durch das Umwandeln einer Zeitdifferenz zwischen dem Zeitpunkt, an dem das Einschalten einer Lichtquelle gestartet wird, und dem Zeitpunkt, an dem ein Vergleichsergebnis, das anzeigt, dass der Signalwert größer ist als die eingestellte Schwelle, in dem Vergleichen in eine Entfernung ausgegeben wird.

## Revendications

1. Appareil de réception de lumière, comprenant :
une unité de réception de lumière (40) comportant un élément de réception de lumière (41) configuré pour recevoir de la lumière et convertir photoélectriquement la lumière en signaux ;
une unité de variation de seuil configurée pour faire varier un seuil ;
une unité de comparaison (56) configurée pour comparer des valeurs de signal des signaux fournis en sortie depuis l'unité de réception de lumière (40) à un seuil variable modifié par l'unité de variation de seuil, et fournir en sortie des signaux indiquant un résultat de comparaison ;
**caractérisé en ce qu'**il comprend en outre :
une unité de comptage configurée pour compter, pour chacun des seuils, un nombre de fois où des signaux indiquant que la valeur de signal est plus grande que le seuil variable sont fournis en sortie depuis l'unité de comparaison (56) ; et
une unité de calcul configurée pour calculer un niveau d'un bruit inclus dans les signaux de sortie sur la base d'un résultat de compte dans l'unité de comptage par calcul d'un écart type de la distribution normale obtenue à partir du résultat de comptage dans l'unité de comptage.

2. Appareil de réception de lumière selon la revendication 1, dans lequel l'unité de variation de seuil est configurée pour faire varier le seuil variable dans une pluralité de zones temporelles dans un temps spécifié, et l'unité de calcul est configurée pour calculer le niveau du bruit à partir d'un résultat de compte dans l'unité de comptage vis-à-vis du seuil variable pour chaque période temporelle.

3. Appareil de détection d'objet (100), comprenant :
une unité de projection de lumière (10) comportant un élément d'émission de lumière (41); et
l'appareil de réception de lumière selon l'une quelconque des revendications 1 ou 2, dans lequel l'élément de réception de lumière (41) est configuré pour recevoir la lumière projetée depuis l'unité de projection de lumière (10) et réfléchie ou diffusée par un objet.

4. Appareil de mesure de distance, comprenant :
l'appareil de détection d'objet (100) selon la revendication 3 ;
une unité d'établissement de seuil configurée pour établir un seuil sur la base d'un résultat de calcul dans l'unité de calcul ; et
une unité d'opération configurée pour calculer une différence temporelle entre un minutage auquel une émission de lumière par l'élément d'émission de lumière est démarrée et un minutage auquel un signal indiquant que le signal est plus grand que le seuil établi par l'unité d'établissement de seuil est fourni en sortie, et fournir en sortie la moitié d'une valeur convertie obtenue par conversion de la différence temporelle en une distance en conformité avec l'une parmi la différence temporelle et une valeur basée sur la différence temporelle.

5. Appareil de mesure de distance selon la revendication 4, dans lequel :
l'unité de projection de lumière (10) est configurée pour projeter séquentiellement de la lumière sur une pluralité de zones obtenues par division d'une zone de projection de lumière ; et
dans une période temporelle allant du moment auquel la lumière est projetée sur l'une de la pluralité de zones au moment auquel la lumière est projetée sur une zone suivante, un temps pendant lequel l'unité d'opération réalise une opération, un temps pendant lequel l'appareil de réception de lumière mesure le bruit, et un temps pendant lequel l'unité d'établissement de seuil établit le seuil établi, sont inclus.

6. Appareil de mesure de distance selon la revendication 5, dans lequel :
l'unité de variation de seuil est configurée pour faire varier le seuil variable dans une pluralité de zones temporelles dans un temps spécifié ; et
l'unité de calcul est configurée pour calculer le niveau du bruit à partir d'un résultat de compte dans l'unité de comptage vis-à-vis du seuil variable pour chaque période temporelle.

7. Appareil de mesure de distance selon la revendication 6, dans lequel
la pluralité de zones est obtenue par une division unidimensionnelle de la zone de projection de lumière dans l'une parmi une direction horizontale et une direction verticale.

8. Appareil de mesure de distance selon la revendication 6, dans lequel
la pluralité de zones est obtenue par une division bidimensionnelle de la zone de projection de lumière dans la direction horizontale et la direction verticale.

9. Appareil de mesure de distance selon l'une quelconque des revendications 4 à 8, comprenant en outre
une unité de classification configurée pour classifier, lorsque l'unité de projection de lumière projette de la lumière une pluralité de fois dans la même direction, la différence temporelle pour chacun du signal de sortie dont la valeur de signal est plus grande que le seuil établi au moment de chacune de la pluralité de fois de projection de lumière dans une pluralité de classes, dans lequel
l'unité d'opération est configurée pour calculer la différence temporelle sur la base d'un signal de sortie dont la valeur de signal est plus grande que le seuil établi parmi les signaux de sortie dans une période temporelle arbitraire chaque fois que de la lumière est projetée et, sur la base d'un résultat de classification dans l'unité de classification, extraire un temps pendant lequel la lumière effectue un va-et-vient entre l'appareil de mesure de distance et l'objet à partir de la différence temporelle pour chaque signal de sortie, et fournir en sortie la moitié d'une valeur convertie obtenue par conversion du temps en une distance.

10. Appareil de mesure de distance selon l'une quelconque des revendications 4 à 8, comprenant en outre
une unité de classification configurée pour classifier, lorsque l'unité de projection de lumière projette de la lumière une pluralité de fois dans la même direction, la valeur convertie pour chaque signal fourni en sortie depuis l'unité de réception de lumière dont la valeur de signal est plus grande que le seuil établi chaque fois de la pluralité de fois où la lumière est projetée dans une pluralité de classes, dans lequel
l'unité d'opération est configurée pour calculer la différence temporelle sur la base d'un signal de sortie dont la valeur de signal est plus grande que le seuil établi parmi les signaux de sortie au dans une période temporelle arbitraire chaque fois que de la lumière est projetée et, sur la base d'un résultat de classification dans l'unité de classification, extraire un temps pendant lequel la lumière effectue un va-et-vient entre l'appareil de mesure de distance et l'objet à partir de la différence temporelle pour chaque signal de sortie, et fournir en sortie la moitié d'une valeur convertie obtenue par conversion du temps en une distance.

11. Appareil à objet mobile comprenant au moins l'un parmi l'appareil de détection d'objet (100) selon la revendication 3, et l'appareil de mesure de distance selon l'une quelconque des revendications 4 à 10.

12. Procédé de mesure de bruit comprenant :
la première fourniture en sortie de lumière de réception et la conversion photoélectrique de la lumière en signaux électriques et la fourniture en sortie des signaux électriques ;
la variation d'un seuil ;
la comparaison de valeurs de signal des signaux électriques fournis en sortie dans la première fourniture en sortie à un seuil variable qui est amené à varier dans la variation ;
le comptage d'un nombre de fois où des résultats de comparaison indiquant que la valeur de signal est plus grande que le seuil variable sont obtenus dans la comparaison ; et
le calcul d'un niveau d'un bruit inclus dans les signaux électriques sur la base d'un résultat de compte dans le comptage par calcul d'un écart type de la distribution normale obtenue à partir du résultat de comptage dans l'unité de comptage.

13. Procédé de détection d'objet, comprenant :
le procédé de mesure de bruit selon la revendication 12 ;
l'établissement d'un seuil sur la base d'un résultat de calcul dans le calcul ;
l'activation d'une source de lumière et la projection de lumière émise depuis la source de lumière ;
la seconde fourniture en sortie de la réception de la lumière projetée dans la projection de lumière et réfléchie par l'objet, la conversion photoélectrique de la lumière reçue en signaux électriques, et la fourniture en sortie des signaux électriques ; et
la comparaison de valeurs de signal des signaux électriques fournis en sortie dans la seconde fourniture en sortie à un seuil établi qui est établi dans l'établissement de seuil.

14. Procédé de mesure de distance comprenant :
le procédé de mesure de bruit selon la revendication 12 ;
l'établissement d'un seuil sur la base d'un résultat de calcul dans le calcul ;
l'activation d'une source de lumière et la projection de lumière émise depuis la source de lumière ;
la réception de la lumière projetée dans la projection de lumière et réfléchie ou diffusée par un objet, la conversion photoélectrique de la lumière reçue ou diffusée en signaux électriques, et la fourniture en sortie des signaux électriques ;
la comparaison de valeurs de signal des signaux électriques fournis en sortie dans la seconde fourniture en sortie au seuil établi qui est établi dans l'établissement ; et
la fourniture en sortie de la moitié d'une valeur de conversion obtenue par conversion d'une différence temporelle entre un minutage auquel l'activation d'une source de lumière est démarrée et le minutage auquel un résultat de comparaison indiquant que la valeur de signal est plus grande que le seuil établi est fourni en sortie dans la comparaison en une distance.
